# EUROPEAN PATENT APPLICATION

(11) **EP 3 808 507 A1**
(43) Date of publication of application: **21.04.2021**
(21) Application number: 19815626.7
(22) Date of filing: 06.06.2019
(51) Int. Cl.: B25D 17/08, B25F 5/00, B23B 45/00

(54) **HAND-HELD POWER TOOL**

(30) Priority: 06.06.2018 CN 201810575313; 06.09.2018 CN 201811037767
(71) Applicant: Positec Power Tools (Suzhou) Co., Ltd, Suzhou, Jiangsu 215123 (CN)
(72) Inventor: ZHONG, Hongfeng, Suzhou, Jiangsu 215123 (CN); ZHENG, Yue, Suzhou, Jiangsu 215123 (CN); ZHANG, Shisong, Suzhou, Jiangsu 215123 (CN); SUN, Yimin, Suzhou, Jiangsu 215123 (CN)
(74) Representative: Dentons UK and Middle East LLP
(86) International application number: PCT/CN2019/090426
(87) International publication number: WO 2019/233485

(57) **Abstract**

The present invention relates to the technical field of hand-held tools. Disclosed is a hand-held power tool, comprising: a housing; a motor; a chuck assembly; and a transmission mechanism having a drive shaft. The chuck assembly comprises a main body, a jaw, and an adjustment member threadedly connected to the jaw. The power tool has a drilling mode in which the main body, the jaw and the adjustment member rotate together, and an auto chuck mode in which the adjustment member and the main body can rotate relative to each other to realize opening and closing of the jaw. The power tool further comprises a first supporting member and a second supporting member used to rotatably support the main body at the housing. The first supporting member and the second supporting member are at least partially overlapped with the jaw in an axial direction of the drive shaft, such that the power tool is structurally compact in the axial direction. The main body is provided with an accommodation cavity therein. The first supporting member is positioned in the accommodation cavity, such that the tool is also structurally compact in a radial direction.

## Description

### BACKGROUND

### Technical Field

The present invention relates to a hand-held power tool, and in particular, to a hand-held power tool having a chuck assembly.

### Related Art

A drive shaft of a hand-held power tool such as an electric drill for drilling a workpiece (for example, a plank or a cement board) or a screwdriver for loosening or tightening a screw is provided with a chuck assembly for holding a tool bit. Different specifications and types of tool bits (for example, a bit for screwing a screw, a flat drill for drilling a hole in a plank, a hammer drill bit for drilling a hole in a cement board, and a twist drill for drilling a hole in a steel plate) may be selected according to different functions of the hand-held power tool. To change tool bits, chuck jaws need to be opened first to release a tool bit originally clamped in a chuck, and a new tool bit is then inserted and is locked in the chuck jaws.

It should be noted that the chuck assembly includes at least chuck jaws, a main body accommodating the chuck jaws, and an adjustment member threadedly coupled to the chuck jaws to enable the chuck jaws to axially move relative to the main body. These structures are usually made of metal, and as a result the chuck assembly is relatively heavy. Therefore, the chuck assembly needs to be supported on a housing to provide more stable output. In a conventional manner, a bearing is provided in the axial direction of a drive shaft located between the chuck assembly and a transmission planetary gear train. The provided bearing occupies a relatively long axial length. This supporting manner leads to a relatively long length of the entire machine.

### SUMMARY

The present invention provides a hand-held power tool. The power tool has a support structure that makes the entire machine structure more compact. The hand-held power tool includes: a housing; a motor disposed in the housing and being configured to be capable of outputting a rotational power; a chuck assemblyincluding a main body, a plurality of chuck jaws movably disposed relative to the main body, and an adjustment member threadedly coupled to the plurality of chuck jaws; and a transmission mechanismincluding a drive shaft configured for transmitting the rotational powerof the motor, where the power tool is at least provided with a drilling mode and an auto chuckt mode; when the power tool is in the drilling mode, the main body is driven by the drive shaft and rotates together with the chuck jaws and the adjustment member; and when the power tool is in the auto chuck mode, one of the adjustment member and the main body is rotatable relative to the other of the adjustment member and the main body to switch the chuck jaws between a fully closed state and a fully open state, and the chuck jaws in the fully open state are closer to the motor in the axial direction of the drive shaft than the chuck jaws in the fully closed state; and the power tool further includes a first support member and a second support member for rotatably supporting the main body in the housing, the first support member is disposed close to the motor in the axial direction of the drive shaft relative to the second support member, when the chuck jaws are in the fully open state, the first support member is at least partially overlapped with the chuck jaws in the axial direction of the drive shaft, and when the chuck jaws are in the fully closed state, the second support member and the chuck jaws overlap in the axial direction of the drive shaft.

Because the first support member and the second support member both overlap the chuck jaws in the axial direction of the drive shaft, an axial size of the power tool is more compact.

Preferably, the power tool further includes a clutch mechanism, when the power tool is in the chuck adjustment mode, the clutch mechanism is used for interrupting a rotational power transmitted from a motor shaft to the adjustment member or the main body when the torque between the plurality of chuck jaws and the adjustment member reaches a predetermined value, so that there is no relative rotation between the adjustment member and the chuck jaws, and the clutch mechanism is at least partially overlapped the chuck jaws in the axial direction of the drive shaft.

Preferably, the clutch mechanism includes a first clutch member, a second clutch member, and a clutch elastic member, one of the first clutch member and the second clutch member is connected to the adjustment member without relative rotation, and the other of the first clutch member and the second clutch member is connected to the housing or the motor; when the power tool is in the auto chuck mode, the first clutch memberengaged with the second clutch member, and when the torque between the first clutch member and the second clutch member reaches a predetermined value, one of the first clutch member and the second clutch is movable relative to the other of the first clutch member and second clutch member against a force of the clutch elastic member to disengageeach other, so that there is no relative rotation between the adjustment member and the plurality of chuck jaws.

Preferably, the adjustment member is sleeved on the outer side of the plurality of chuck jaws, an inner circumferential surface of the adjustment member is provided with an internal thread, and the chuck jaw is provided with an external thread matching the internal thread.

Preferably, the main body is provided with an accommodating cavity, the accommodating cavity has an opening facing the motor, and the first support member is located in the accommodating cavity.

Preferably, the housing includes a main housing accommodating the motor, an end cover extending radially from the main housing, and a support portion extending cross the end cover to the accommodating cavity, the first support member is supported on the outer side of the support portion.

Preferably, the main body has a first end close to the motor and a second end far away from the motor, and the end cover is disposed adjacent to the first end and is located between the main body and the motor.

Preferably, the power tool further includes at least one- output planetary gear train located on a side of the end cover away from the motor, the output planetary gear train includes at least one sun gear coupled to the drive shaft and a set of planetary gears disposed at the main body and engaged with the sun gear, in the drilling mode, the drive shaft is capable of driving the main body through the planetary gears to rotate, and when the chuck jaws are in the fully open state, the chuck jaws is at least partially overlapped with the planetary gears in the axial direction of the drive shaft.

Preferably, the support portion is a hollow cylindrical body, the drive shaft penetrates the cylindrical body, and the sun gear is connected to an end portion, extending into the main body, of the drive shaft.

Preferably, the power tool includes at least a one-stage output planetary gear train, the output planetary gear train includes a sun gear connected to the drive shaft, a set of planetary gears driven by the sun gear, and an output gear ring engaged with the planetary gears, in the drilling mode, the output gear ring is fixed relative to the housing, and the drive shaft is capable of driving the main body through the planetary gears to rotate, and when the chuck jaws are in the fully open state, the planetary gears are at least partially overlapped with the chuck jaws in the axial direction of the drive shaft.

Preferably, the power tool further includes a mode selection mechanism, the mode selection mechanism is operable to enable the power tool to switch at least between the drilling mode and the chuck adjustment mode, in the chuck adjustment mode, the main body is fixed relative to the housing, and the output gear ring is rotatable relative to the housing under the drive of the motor and is capable of transmitting the rotational power to the adjustment member.

Preferably, the mode selection mechanism includes a mode selection member and a connecting member driven by the mode selection member, in the chuck adjustment mode, the connecting member is capable of transmitting a driving force of the output gear ring to the adjustment member, and in the drilling mode, the connecting member interrupts the power transmission between the output gear ring and the adjustment member in the rotation direction.

Preferably, when the chuck jaws are in the fully open state, the connecting member and the chuck jaws overlap in the axial direction of the drive shaft.

Preferably, the mode selection mechanism further includes a locking component that is nonrotatably disposed relative to the housing and is capable of being driven by the mode selection member, and the locking component selectively fixes the main body or the output gear ring relative to the housing.

Preferably, when the chuck jaws are in the fully open state, the locking component and the chuck jaws overlap in the axial direction of the drive shaft.

Preferably, the power tool further includes a mode selection mechanism, the mode selection mechanism includes a mode selection member that is operable to enable the power tool to switch at least between the drilling mode and the chuck adjustment mode, and the mode selection member is at least partially overlapped with the chuck jaws in the axial direction of the drive shaft.

Preferably, the chuck assembly includes a chuck housing covering at least a part of the main body, the chuck housing is fixedly connected to the housing, and the second support member is located between an end, away from the motor, of the main body and the chuck housing.

Preferably, the distance between an end face, close to the chuck assembly, of the motor and an end face, away from the motor, of the main body is between 80 mm and 95 mm.

The present invention further provides a power tool making a radial size of the entire machine more compact, including:
a housing; a motor, disposed in the housing, and outputting a rotational power; a chuck assembly, including a main body, a plurality of chuck jaws movably disposed relative to the main body, and an adjustment member threadedly connected to the plurality of chuck jaws; and a transmission mechanism, including a drive shaft for transmitting a driving force of the motor, where the power tool is at least provided with a drilling mode and a chuck adjustment mode; in the drilling mode, the main body is driven by the motor and rotates together with the chuck jaws and the adjustment member; and in the chuck adjustment mode, one of the adjustment member and the main body is rotatable relative to the other of the adjustment member and the main body to close or open the chuck jaws; and the power tool further includes a first support member rotatably supporting the main body in the housing, an accommodating cavity is provided in the main body and has an opening facing the motor, and the first support member is located in the accommodating cavity.

Preferably, the power tool includes at least a one-stage output planetary gear train, the output planetary gear train includes a sun gear driven by a motor shaft to rotate, a set of planetary gears driven by the sun gear, and an output gear ring engaged with the planetary gears, in the drilling mode, the main body is rotatable under the drive of the planetary gears, and when the chuck jaws are in a fully open state, the planetary gears is at least partially overlapped with the chuck jaws in the axial direction of the drive shaft.

Preferably, the distance between an end face, close to the chuck assembly, of the motor and an end face, away from the motor, of the main body is between 80 mm and 95 mm.

Preferably, a radial length of the chuck assembly is less than or equal to 60 mm.

### BRIEF DESCRIPTION OF THE DRAWINGS

FIG. 1 is a partial three-dimensional exploded view of a transmission mechanism and a chuck assembly in a first embodiment of the present invention.
FIG. 2 is a three-dimensional view of a screwdriver in the first embodiment of the present invention.
FIG. 3 is a sectional view of a screwdriver in a chuck adjustment mode in the first embodiment of the present invention, chuck jaws being in a closed state.
FIG. 4 is a sectional view of the screwdriver in the chuck adjustment mode in the first embodiment of the present invention, the chuck jaws being in an open state.
FIG. 5 is a sectional view of the screwdriver in a drilling mode in the first embodiment of the present invention, the screwdriver being in a low-speed state.
FIG. 6 is a sectional view of the screwdriver in the drilling mode in the first embodiment of the present invention, the screwdriver being in a high-speed state.
FIG. 7 is an enlarged view of a portion A in FIG. 3.
FIG. 8 is a schematic diagram of a position relationship between a mode selection member and a sliding groove in the chuck adjustment mode in an automatic chuck mode when the chuck jaws are in the open state in the open state in the first embodiment of the present invention.
FIG. 9 is a schematic diagram of an open trigger member of a switching ring triggering a motor reversing switch in the state corresponding to FIG. 8.
FIG. 10 is a schematic diagram of a position relationship between the mode selection member and the sliding groove in the drilling mode when the screwdriver is in the low-speed state in the first embodiment of the present invention.
FIG. 11 is a schematic diagram of a relationship between the position of the switching ring and the position of the motor reversing switch in the state corresponding to FIG. 10.
FIG. 12 is a schematic diagram of a position relationship between the mode selection member and the sliding groove in the chuck adjustment mode when the chuck jaws are in the closed state in the first embodiment of the present invention.
FIG. 13 is a schematic diagram of a locking trigger member of the switching ring triggering the motor reversing switch in the state corresponding to FIG. 12.
FIG. 14 is a three-dimensional schematic diagram of a second internal gear ring with a shift steel wire in the first embodiment of the present invention.
FIG. 15 is a schematic diagram of a position relationship between a gearbox housing, the shift steel wire, the mode selection member, and the switching ring in the first embodiment of the present invention.
FIG. 16 is a three-dimensional schematic diagram of the mode selection member and a slide member connected to the mode selection member in the first embodiment of the present invention.
FIG. 17 is a three-dimensional schematic diagram of the switching ring in the first embodiment of the present invention.
FIG. 18 is a three-dimensional schematic diagram of the screwdriver in the low-speed state in the drilling mode in the first embodiment of the present invention.
FIG. 19 is a three-dimensional schematic diagram of the screwdriver in the high-speed state in the drilling mode in the first embodiment of the present invention.
FIG. 20 is a three-dimensional schematic diagram in the state corresponding to FIG. 8.
FIG. 21 is a three-dimensional schematic diagram in the state corresponding to FIG. 12.
FIG. 22 is a three-dimensional schematic diagram of an output gear ring and a second push rod assembly connected to the output gear ring in the first embodiment of the present invention.
FIG. 23 is a three-dimensional schematic diagram of a body lock and a first push rod assembly connected to the body lock in the first embodiment of the present invention.
FIG. 24 is a partial three-dimensional exploded view of a transmission mechanism and a chuck assembly in a second embodiment of the present invention.
FIG. 25 is a sectional view of a screwdriver in a drilling mode in the second embodiment of the present invention.
FIG. 26 is a sectional view of the screwdriver in a chuck adjustment mode in the second embodiment of the present invention.
FIG. 27 is a partial sectional view of a screwdriver in a drilling mode in a third embodiment of the present invention.
FIG. 28 is a partial sectional view of an intermediate state of the screwdriver when the screwdriver is switched from the drilling mode to a chuck adjustment mode in the third embodiment of the present invention.
FIG. 29 is a partial sectional view of the intermediate state of the screwdriver when the screwdriver is switched from the drilling mode to the chuck adjustment mode in the third embodiment of the present invention.
FIG. 30 is a partial sectional view of the screwdriver in the chuck adjustment mode in the third embodiment of the present invention.
FIG. 31 is a three-dimensional exploded view of a partial structure of a screwdriver in a fourth embodiment of the present invention.
FIG. 32 is a schematic sectional view of the screwdriver in a drilling mode in the fourth embodiment of the present invention.
FIG. 33 is a schematic partial three-dimensional structural view of the screwdriver in the drilling mode in the fourth embodiment of the present invention.
FIG. 34 is a schematic sectional view of the screwdriver in a chuck adjustment mode in the fourth embodiment of the present invention.
FIG. 35 is a schematic partial three-dimensional structural view of the screwdriver in the chuck adjustment mode in the fourth embodiment of the present invention.
FIG. 36 is a schematic partial three-dimensional structural view of the screwdriver in the drilling mode in the fourth embodiment of the present invention, a switch trigger is pushed to an end position.
FIG. 37 is a schematic three-dimensional structural view of the screwdriver in the fourth embodiment of the present invention.
FIG. 38 is a schematic sectional view, along a line A-A corresponding to FIG. 34, of the entire machine of the screwdriver in a drilling mode in the fourth embodiment of the present invention.
FIG. 39 is a schematic sectional view of a partial structure of the screwdriver in the fourth embodiment of the present invention.
FIG. 40 is a schematic partial structural view of the screwdriver in the drilling mode in the fourth embodiment of the present invention.
FIG. 41 is a schematic partial structural view of the screwdriver in an automatic chuck mode in the fourth embodiment of the present invention.
FIG. 42 is a schematic partial structural view of the screwdriver in the drilling mode and a switch operating member in a pressed state in the fourth embodiment of the present invention.
FIG. 43 is a schematic partial structural view of a screwdriver in a drilling mode in a fifth embodiment of the present invention.
FIG. 44 is a schematic diagram of an intermediate state of the screwdriver when the screwdriver is switched from the drilling mode to an automatic chuck mode in the fifth embodiment of the present invention.
FIG. 45 is a schematic partial structural view of the screwdriver in the automatic chuck mode in the fifth embodiment of the present invention.

### DETAILED DESCRIPTION

### First Embodiment

In an exemplary implementation of a hand-held power tool according to the present invention, the hand-held power tool is a screwdriver. According to different power sources, there may be a pneumatic screwdriver, a hydraulic screwdriver, and an electric screwdriver. The electric screwdriver may be a direct current (DC) electric screwdriver or an alternate current (AC) electric screwdriver. In the present invention, a DC electric screwdriver is preferably used as an example for specific description.

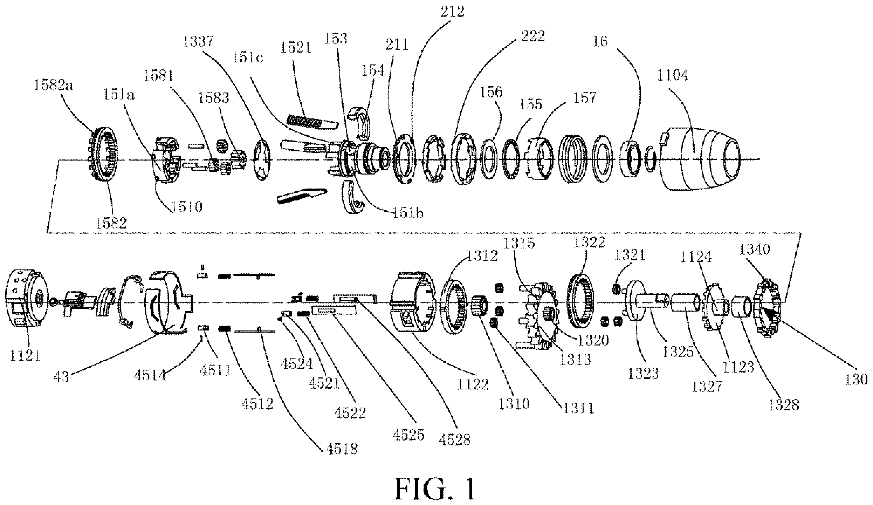

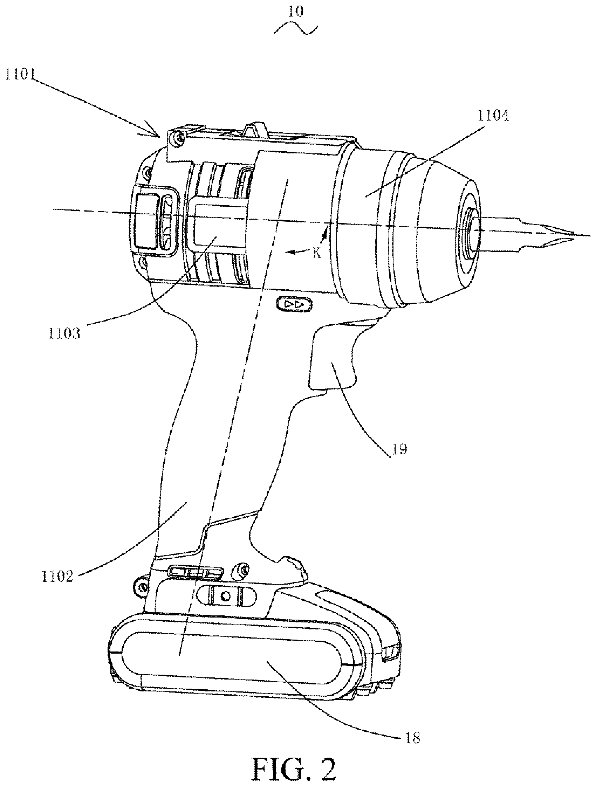

Referring to FIG. 1 to FIG. 6, a DC electric screwdriver 10 includes a housing, a motor 12 supplying a rotational power, a battery 18 for supplying a power, a transmission mechanism, and a chuck assembly. The chuck assembly includes a chuck housing 1104 and an output apparatus 15 at least partially located in the chuck housing 1104.

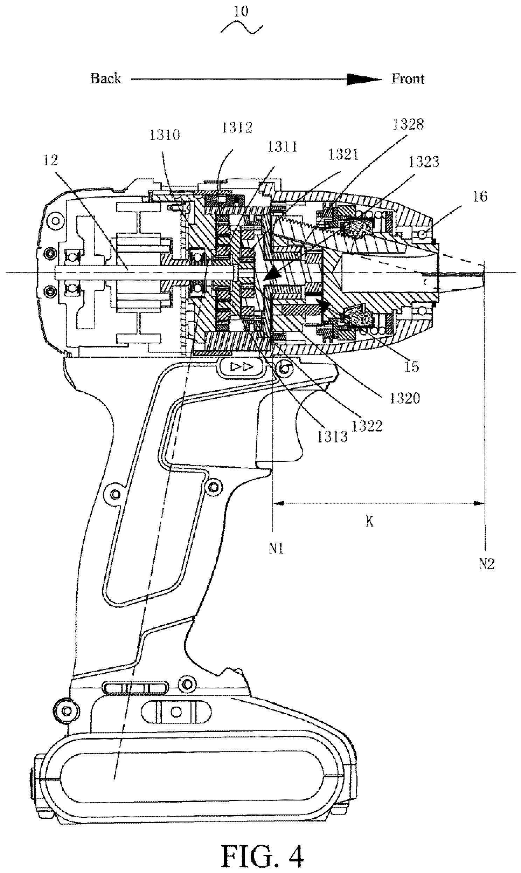

The housing includes a handle housing 1102 for forming a grip handle and a rear housing 1103 that is fixedly connected to the handle housing 1102 and is used for supporting and covering the motor 12. The chuck housing 1104 (a front housing) is butted to the rear housing 1103 to form a cylindrical main housing 1101 extending in the horizontal direction. In this embodiment, the main housing 1101 and the handle housing 1102 are disposed at an obtuse angle K. Preferably, the angle K is between 100 degrees and 130 degrees, so that it is relatively comfortable to operate the grip handle. The main housing 1101 has a rear end face located in the rear (for the front and rear directions mentioned in the present invention, the front and rear directions of the hand-held power tool shown in FIG. 4 are used as a reference standard, that is, a direction from the rear to the front is a direction from the motor to the output apparatus) and a front end face located in the front. The main housing sequentially accommodates the motor 12, the transmission mechanism, and at least a part of the output apparatus 15 from the rear end face to the front end face. It should be noted that, in this embodiment, the chuck housing 1104 is fixedly connected to the rear housing 1103, that is, a chuck housing of an electric tool remains nonrotatable. In this way, when the electric tool operates, the chuck housing is prevented from touching an outer wall of a narrow space when a chuck extends into the narrow space, so that the chuck has adequate accessibility. Preferably, the handle housing 1102 and the rear housing 1103 are both formed by half housings. The half housing of the rear housing 1103 and the half housing of the handle housing 1102 are integrally formed. The chuck housing 1104 is a cylindrical housing (referring to FIG. 1). It may be understood that, in another embodiment, the chuck housing 1104 may be alternatively formed by two half housings. The half housings located on the same side of the chuck housing 1104, the rear housing 1103, and the handle housing 1102 are integrally formed to form two symmetrical half housings forming the housing. Certainly, it may be understood that, in another embodiment, the chuck housing 1104 may further be disposed rotatable relative to the rear housing 1103. For example, when the electric tool operates, the chuck housing 1104 rotates together with the output apparatus 15.

A button switch 19 is disposed at a part, close to the main housing 1101, of an upper portion of the handle housing 1102. The battery 18 is fixed at a rear portion of the handle housing 1101. In a preferred implementation, the battery 18 may be a lithium-ion battery. It should be noted that the lithium-ion battery mentioned herein is a generic term for rechargeable batteries based on lithium-ion deintercalation-intercalation reactions, and can constitute many systems such as a "lithium manganese" battery and a "lithium iron" battery based on different cathode materials. Certainly, the battery may be alternatively a battery of another type, for example, a battery type such as a nickel-cadmium battery or a nickel-hydrogen battery well known to a person skilled in the art. In this embodiment, the transmission mechanism is specifically a planetary gear speed reduction mechanism 13. A rotational power outputted by an output shaft of the motor 12 is reduced by the planetary gear speed reduction mechanism 13 and then transmitted to the output apparatus 15. The output apparatus 15 further drives a tool bit to rotate, to enable the tool bit to produce an output according to a required speed.

Continuing to refer to FIG. 1 to FIG. 6, in an exemplary embodiment of the present invention, the motor 12 is configured as an electric motor. The electric motor is fixed in the rear housing 1103 by a positioning bar (not shown in the figure) and a screw 17 that are located in the housing, and is provided with a motor shaft 121 extending forward from the rear housing 1103. The motor shaft 121 extends into the planetary gear speed reduction mechanism 13, and produces an output after reduction by the planetary gear speed reduction mechanism 13. Preferably, the planetary gear speed reduction mechanism 13 is a two-stage planetary gear speed reduction mechanism and includes a first-stage planetary gear train 131 close to the motor and a second-stage planetary gear train 132 close to the output apparatus 15. The first-stage planetary gear train 131 includes a first sun gear 1310 fixed on the motor shaft 121, a first set of planetary gears 1311 engaged with the first sun gear 1310 and disposed at a periphery of the first sun gear 1310, a first internal gear ring 1312 engaged with the first set of planetary gears 1311, and a first planetary carrier 1313 for supporting the first set of planetary gears 1311. The second-stage planetary gear train 132 includes a second sun gear 1320 fixedly disposed on the first planetary carrier 1313, a second set of planetary gears 1321 engaged with the second sun gear 1320, a second internal gear ring 1322 engaged with the second set of planetary gears 1321, and a second planetary carrier 1323 for supporting the second set of planetary gears 1321. The transmission mechanism further includes a drive shaft 1325 connected to the second planetary carrier 1323 and driven by the second planetary carrier.

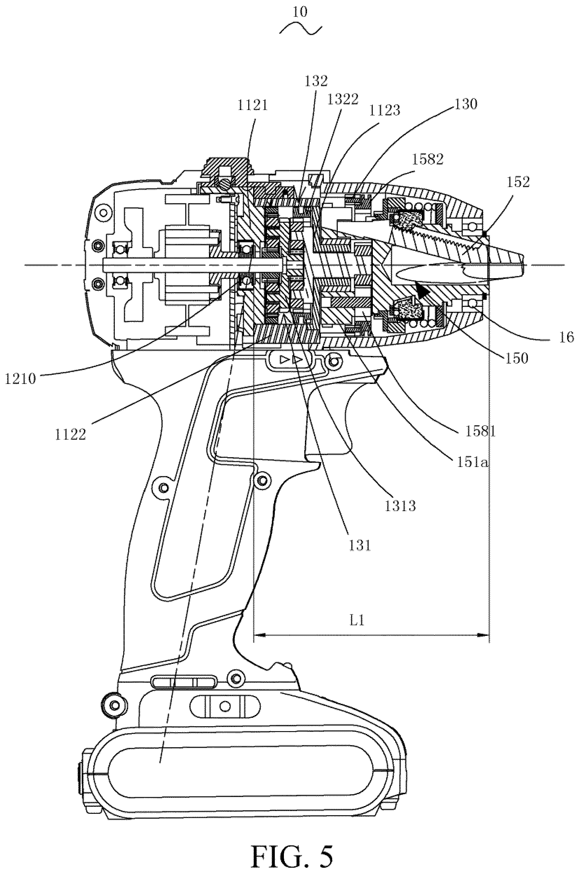

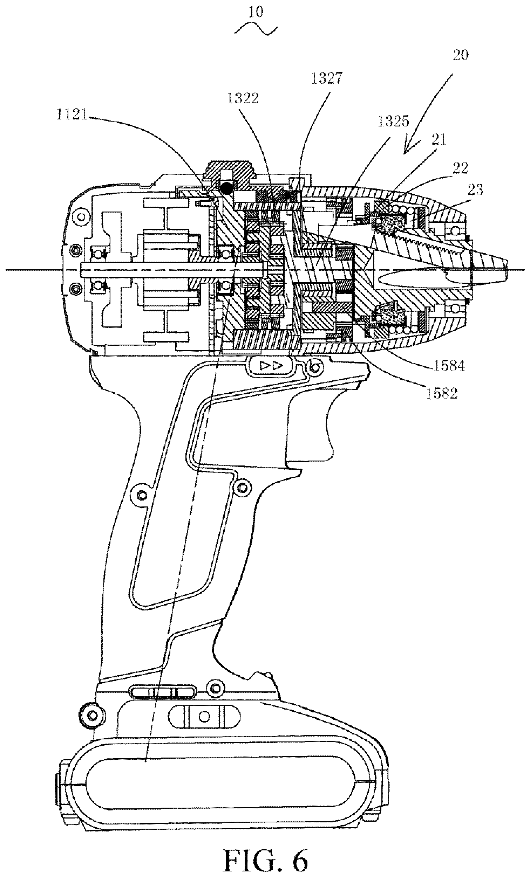

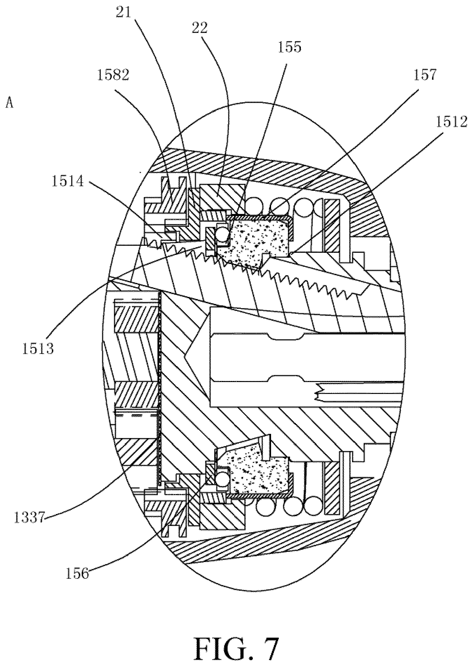

The output apparatus 15 includes an output shaft 150. The output shaft 150 includes a main body 151, a chuck groove 153 that is provided in the main body 151 and is at a specific angle relative to an axis of the output shaft 150, and an accommodating hole for accommodating a tool bit. The output apparatus 15 further includes chuck jaws 152 that are disposed in the chuck groove 153 and are disposed around the accommodating hole to clamp the tool bit and an adjustment member sleeved at a periphery of the main body 151. Preferably, the adjustment member includes a nut cover 154. An inner circumferential wall of the nut cover 154 is provided with an internal thread (not shown in the figure). A side face, facing the internal thread, of the chuck jaw 152 is provided with an external thread 1521. When the nut cover 154 rotates relative to the chuck jaws 152, the interaction between the internal thread and the external thread 1521 makes the chuck jaws 152 open or close. The chuck jaws 152 move along the chuck groove to be movable between a front-end position in which the chuck jaws 152 are in a closed state and a rear-end position in which the chuck jaws 152 are in a fully open state. It should be noted that in the "closed state" herein, the inner surfaces of the plurality of chuck jaws are in contact with each other when the chuck jaws do not clamp any tool bit or object, and reference may be made to a state diagram of the chuck jaws in FIG. 5 and FIG. 6. In this case, the chuck jaws are farthest away from the motor in the axial direction of the drive shaft. In the "fully open state" herein, the chuck jaws are open to a maximum value when one of the adjustment member and the main body rotates relative to the other of the adjustment member and the main body to make the chuck jaws open, and the chuck jaws can no longer move in the chuck groove 153. In this case, the chuck jaws are closest to the motor in the axial direction of the drive shaft 1325. The chuck jaws in the fully open state are closer to the motor in the axial direction of the drive shaft 1325 than the chuck jaws in the fully closed state. Preferably, the nut cover 154 is rotatably but not axially movably disposed at the main body 151. Preferably, an annular groove 1511 is disposed at a periphery of the main body 151, the nut cover 154 is rotatably disposed in the annular groove (not shown in the figure), and the annular groove can limit the axial movement of the nut cover 154. Referring to FIG. 7, the main body 151 includes a first flange 1512 and a second flange 1513 that are respectively located at two ends of the annular groove. The first flange 1512 can abut against an end, close to the tool bit, of the nut cover 154, to limit the movement (that is, movement to the front) of the nut cover 154 toward the end at which the tool bit is located. The second flange 1513 can axially limit an end, close to the motor 12, of the nut cover 154, to prevent the nut cover 154 from moving toward the motor (that is, movement to the rear). It may be understood that when the chuck jaws 152 clamp or almost clamp the tool bit, the nut cover 154 is subject to an increasing force from the chuck jaws 152 (threads of the chuck jaws) during rotation. The nut cover 154 tends to move backward in the axial direction. That is, the nut cover 154 causes the second flange 1513 to bear a relatively large backward axial force. Therefore, an end surface bearing 155 and a gasket 156 are disposed between the nut cover 154 and the second flange 1513. Preferably, the gasket 156 is a wear-resistant metal gasket. In this embodiment, for ease of mounting, the nut cover 154 is formed by joining two semi-circular half-nut covers. Certainly, in another embodiment, the nut cover 154 may further be disposed in a manner of three or more half-nut covers. It may be understood that to enable the two half-nut covers to be effectively fixed together, a nut sleeve 157 is sleeved on the outer side of the two half-nut covers. In this embodiment, the diameter of the accommodating hole is set to be not less than 10 mm. Preferably, the diameter of the accommodating hole is between 10 mm and 13 mm.

Referring to FIG. 5 and FIG. 6, in this embodiment, the second internal gear ring 1322 is movable relative to the housing along the motor shaft 121 between a first reduction position (shown in FIG. 6) close to the motor and a second reduction position (shown in FIG. 5) far away from the motor. When the second internal gear ring 1322 is in the first reduction position, the second internal gear ring 1322 is rotatably disposed in the housing, and the second internal gear ring 1322 is simultaneously engaged with the first planetary carrier 1313 and the second set of planetary gears 1321. Therefore, the first planetary carrier 1313, the second set of planetary gears 1321, and the second internal gear ring 1322 rotate together, and the second-stage planetary gear train 132 produces an output without reduction. That is, the second planetary carrier 1323 rotates at the same speed as the first planetary carrier 1313, and the second planetary carrier 1323 produces a high-speed output. When the second internal gear ring 1322 is in the second reduction position, the second internal gear ring 1322 is circumferentially nonrotatably fixed to the rear housing 1103, and the second internal gear ring 1322 is disengaged from the first planetary carrier 1313, but the second internal gear ring 1322 is still engaged with the second set of planetary gears 1321 during the axial movement, so that the second planetary carrier 1323 produces an output at a preset reduction ratio relative to the first planetary carrier 1313, and the second planetary carrier 1323 produces a low-speed output.

Referring to FIG. 1 and FIG. 5, the first planetary carrier 1313 includes a first pin shaft (not shown in the figure) for mounting the firs tset of planetary gears 1311, a first disc-shaped body 1314, and a first planetary carrier output shaft 1315 disposed on a surface, away from the first pin shaft, of the first disc-shaped body 1314. In this embodiment, to enable the chuck assembly to be better supported and the structure of entire machine is still relatively compact, a first support member and a second support member for supporting the main body 1314 in the housing are disposed in this embodiment. The first support member is disposed close to the motor in the axial direction of the drive shaft 1325 relative to the second support member. Referring to FIG. 4, when the chuck jaws are in the fully open state, the chuck jaws are at least partially overlapped with the first support member 1327 in the axial direction of the drive shaft 1325. Referring to FIG. 6, when the chuck jaws are in the fully closed state, the chuck jaws and the second support member 16 overlap in the axial direction of the drive shaft 1325. It may be understood that, in this embodiment, because the chuck housing is fixedly connected to the housing, the second support member 16 may be disposed between the main body and the chuck housing and located at an end, away from the motor, of the main body 151. For the first support member 1327, the main body 151 is provided with an accommodating cavity 1515. The accommodating cavity 1515 has an opening facing the motor. The first support member 1327 is located in the accommodating cavity 1515. To support the first support member 1327 between the main body and the housing, the rear housing extends inwardly to form an end cover 1123 and the end cover 1123 extends toward the accommodating cavity 1515 to form a support portion 1124. The first support member 1327 is supported on the outer side of the support portion 1124. The main body 151 has a first end close to the motor and a second end far away from the motor. The end cover 1123 is disposed adjacent to the first end and is located between the main body 151 and the motor. Therefore, the end cover can axially isolate the main body 151 from the planetary gear train of the transmission mechanism and becomes a part of a gearbox housing. The gearbox housing further includes a gearbox rear end cover 1121 for isolating the motor from the first-stage planetary gear train 131 and a gearbox sleeve 1122 circumferentially enclosed on the outer side of the first-stage planetary gear train 131 and the second-stage planetary gear train 132.

In this embodiment, the output apparatus 15 further includes a set ofoutput planetary gears 1581 rotatably fixed on the main body 151, an output gear ring 1582 located outside the output planetary gears 1581 and engaged with the output planetary gears 1581, and an output sun gear 1583 engaged with the output planetary gears 1581. In this embodiment, the support portion 1124 is a hollow cylindrical body, the drive shaft 1125 penetrates the cylindrical body, and the output sun gear 1583 is connected to an end portion, extending into the main body, of the drive shaft 151. It may be understood that, in another embodiment, the shape of the accommodating cavity may be another shape. For example, the accommodating cavity is disposed as an annular groove with an opening facing the motor. The support portion 1124 is still a hollow cylindrical body. However, the first support member 1327 is located between the inner wall of the cylindrical body and the groove wall of the annular groove.

In this embodiment, to facilitate the processing and manufacturing of the output apparatus 15, the main body 151 includes a first body 151a and a second body 151b rotatably connected to the first body 151a. Preferably, to meet a strength requirement in torque transmission between the first body 151a and the second body 151b, one of the first body 151a and the second body 151b extends towards the other of the first body 151a and the second body 151b to form an extended portion 151c that at least partially axially overlaps the other body. Torque transmission is performed through the circumferential abutment of the overlapping parts of the first body 151a and the second body 151b, and the first body 151a and the second body 151b are fixedly connected by press fitting. The first body 151a is located between the planetary gear speed reduction mechanism 13 and the output planetary gears 1581 in the axial direction of the drive shaft 1325.

Referring to FIG. 1 and FIG. 4, to further reduce the axial length of the hand-held power tool, a projection of the chuck groove 153 on the axis of the output shaft 150 and a projection of the output planetary gears on the axis of the output shaft 150 at least partially overlap. That is, the chuck groove 153 is at least partially located on the extended portion 151c. Preferably, the projection of the chuck groove 153 on the axis of the output shaft 150 is at least partially overlapped with a projection of the first body 151a on the axis of the output shaft 150 in the axial direction. That is, the chuck groove 153 is at least partially disposed on the first body 151a, to provide a space for the chuck jaws 152 to move toward the motor when the chuck jaws are opened. In other words, when the chuck jaws 152 move to a rear-end position, projections of the chuck jaws 152 on the axial direction are at least partially overlapped with the projection of the output planetary gears 1581 on the axial direction. More preferably, when the chuck jaws 152 move to the rear-end position, the projections of the output planetary gears 1581, the output gear ring 1582, and the output sun gear 1583 in the axial direction of the drive shaft overlap the projections of the chuck jaws 153 in the axial direction of the drive shaft 1325. More preferably, to minimize the axial length of the main body 151 to reduce the axial length of the power tool, when the chuck jaws 152 move to the rear-end position, a distance between an end face, near a front end cover 1123, of the main body 151 and the front end cover is L3 (not shown in the figure), a distance between a portion, near the front end cover, of the chuck jaw and the front end cover is L4 (not shown in the figure), and L3 ≤ L4. In other words, to minimize the axial length of the main body to reduce the axial length of the power tool, when the chuck jaws 152 move to the rear-end position (that is, even when the chuck jaws are fully opened), a rear end portion of the chuck jaw 152 is closer to the rear in the axial direction than a rear end portion of the main body or a rear end portion of the chuck jaw 152 is flush with a rear end portion of the main body in the axial direction.

Referring to FIG. 6, in this embodiment, the output apparatus 15 further includes an output pin shaft 1584 (referring to FIG. 6) fixed on the main body 151, and the output planetary gears 1581 is rotatably disposed on the output pin shaft 1584. Preferably, to facilitate the assembly of the output apparatus 15, the output pin shaft 1584 may be selectively fixed to the first body 151a or the second body 151b. In this embodiment, preferably, an end, close to the first body 151a, of the output pin shaft 1584 is fixed to the first body 151a, and an end, close to the second body 151b, of the output pin shaft 1584 is spaced apart from the second body 151b. That is, the end, close to the second body 151b, of the output pin shaft 1584 is in a suspended state, but is not fixed to the second body 151b. To reduce the friction between the end portion of the output planetary gears 1581 and the first body 151a or the second body 151b, a gasket 1337 (referring to FIG. 1 and FIG. 7) is respectively disposed between the output planetary gears 1581 and the first body 151a as well as the second body 151b. Preferably, the gasket 1337 is a metal gasket. It should be noted that the output pin shaft 1584 may be alternatively fixed on the second body151b. Alternatively, one end of the output pin shaft 1584 is fixed on the first body 151a, and the other end is fixed on the second body 151b. It may be understood that, in another embodiment, the structure of the output apparatus 15 may be in other forms. Details are not described herein again.

In this embodiment, the screwdriver further includes a mode selection mechanism. The mode selection mechanism can enable the screwdriver to be switched between a drilling mode and a an auto chuck mode. When the screwdriver is in the drilling mode, the motor 12 drives the main body 151, the chuck jaws 152, and the adjustment member to rotate together to drive the tool bit (a screwdriver bit) to operate. When the screwdriver is in the auto chuck mode, relative rotation can be performed between the nut cover 154 and the chuck jaws 152, and the chuck jaws 152 perform an opening action or a closing action. Preferably, in this embodiment, the main body 151 and the chuck jaws 152 located in body 151 do not rotate, and the nut cover 154 rotates relative to chuck jaws 152 to cause the chuck jaws 152 to perform the opening action or closing action.

The output sun gear 1583 is located on the drive shaft 1325 extending outside a hollow support cover 1124 and is engaged with the output planetary gears 1581 disposed on the main body 151, to transmit the rotation of the second-stage planetary gear train 132 to the output apparatus 15. In this embodiment, the output gear ring 1582 has a first operating position close to the motor in the axial direction and a second operating position far away from the motor in the axial direction. Referring to FIG. 5 and FIG. 6, when the screwdriver is in the drilling mode and the output gear ring 1582 is in the first operating position, the output gear ring 1582 is nonrotatably fixed relative to the housing. That is, the output gear ring 1582 is nonrotatable relative to the housing, and the output gear ring 1582 is engaged with the output planetary gears 1581. Therefore, the output sun gear 1583 transmits the rotation to the output planetary gears 1581. The output planetary gears 1581 drives, under the action of the fixed output gear ring 1582, the main body 151, the chuck jaws, and the tool bit located in the main body 151 to rotate.

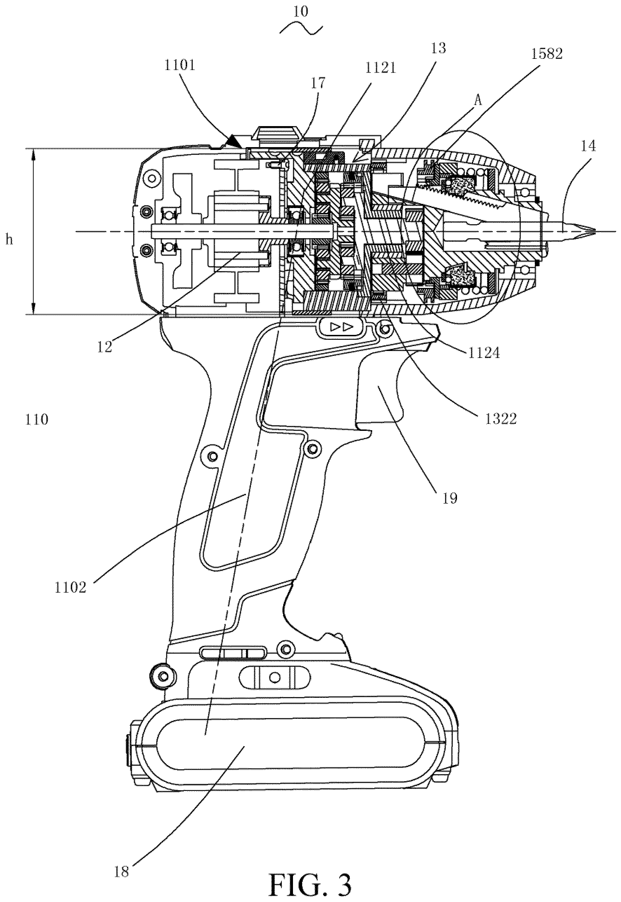

Referring to FIG. 3 and FIG. 4, when the screwdriver is in the auto chuck mode and the output gear ring 1582 is in the second operating position, the output gear ring 1582 is still engaged with a third planetary gears 1331 but is rotatable relative to the housing. That is, when the output gear ring 1582 is in the second operating position, the output planetary gears 1581 transmits the rotation to the output gear ring 1582, so that the output gear ring 1582 rotates relative to the housing. In the second operating position, the output gear ring 1582 can simultaneously transmit the rotation to the nut cover 154 to enable the nut cover 154 to rotate relative to the chuck jaws 152, so that the chuck jaws 152 can perform the opening action or closing action as required.

It may be learned from the foregoing description that, in the auto chuck mode, when the output gear ring 1582 is in the second operating position, the output planetary gears 1581 transmits the rotation to the output gear ring 1582 and further transmits the rotation to the nut cover 154 through the output gear ring 1582, to enable the nut cover 154 to rotate relative to the main body 151 (the chuck jaws 152) that does not rotate at this time, so that the chuck jaws 152 perform the opening action or closing action as required. Preferably, in this embodiment, the nut cover 154 is rotatable relative to the main body 151 and the chuck jaws 152 disposed in the main body 151 by selectively locking the main body 151 to the housing. Preferably, in this embodiment, the main body 151 is fixed relative to the housing by selectively locking the first body 151a to the housing.

Referring to FIG. 1, to fix the first body 151a relative to the housing in the auto chuck mode, the mode selection mechanism includes a locking component 130 for fixing the first body 151a. The locking component 130 remains circumferentially nonrotatably fixed to the housing but is axially movable relative to the housing, to be switched between a first locking position and a second locking position. Preferably, in this embodiment, the locking component 130 moves in the axial direction to implement the switching of the locking component 130 between the first locking position and the second locking position. The first body 151a is provided with a locking coupling portion coupled to the locking component 130 (a main body lock). In this embodiment, the first locking position is close to the locking coupling portion on the first body 151a and is coupled to the locking coupling portion, and the second locking position is far away from the locking coupling portion of the first body 151a and is separated from the locking coupling portion. Referring to FIG. 3 and FIG. 4, when the screwdriver is in the auto chuck mode and the locking component 130 is located in the first locking position, the locking component 130 circumferentially nonrotatably locks the first body 151a to the housing. Referring to FIG. 5 and FIG. 6, in the drilling mode, the locking component 130 is located in the second locking position, the locking component 130 releases the circumferential locking of the first body 151a, and the output planetary gears 1581 is capable of driving the main body 151 and the chuck jaws 152 located in the main body 151 to rotate together. It should be noted that, as may be learned in the foregoing description, in this embodiment, in the drilling mode, the output gear ring 1582 is in a first position that is nonrotatable relative to the housing. Therefore, the mode selection mechanism further includes a structure such as an internal gear ring lock fixed in the housing when the output gear ring 1582 is in the first operating position. In this embodiment, to simplify the structure inside the screwdriver, the locking component 130 can also be used for locking the output gear ring 1582 relative to the housing. That is, in this embodiment, the locking component 130 simultaneously functions as the internal gear ring lock. That is, the locking component 130 includes the main body lock for locking the main body and the internal gear ring lock for locking the output gear ring 1582.

The structure of the locking component 130 and the operation principle of how the locking component 130 functions as the main body lock and as the internal gear ring lock in the drilling mode and the auto chuck mode respectively are described below in detail with reference to the accompanying drawings. Referring to FIG. 5 and FIG. 6, in the drilling mode, when the locking component 130 is located in the second locking position, the output gear ring 1582 is in the first operating position. In this case, the locking component 130 releases the circumferential locking of the first body 151a, is connected to the output gear ring 1582, and nonrotatably fixes the output gear ring 1582 to the housing, so that the output planetary gears 1581 is capable of driving the main body 151 and the chuck jaws 152 to rotate. That is, a part, functioning as the main body lock, of the locking component is separated from the first body 151a, and a part, functioning as the internal gear ring lock, of the locking component is connected to the output gear ring 1582. Preferably, the locking component 130 includes a through groove 1340 provided in an inner wall of the locking component. The output gear ring 1582 is provided with gear ring lock teeth 1582a matching the through groove 1340. The through groove 1340 of the locking component 130 and the gear ring lock teeth 1582a located at an end portion of the output gear ring 1582 are engaged to implement the circumferential fixation of the output gear ring 1582. That is, the gear ring lock teeth 1582a of the output gear ring 1582 are inserted into the corresponding axial through groove 1340 to fix the output gear ring 1582. In this case, the output sun gear 1583 transmits torque to the third planetary gears 1331, and under the action of the output gear ring 1582, the output planetary gears 1581 revolves around the output sun gear 1583 to drive the main body 151 and the chuck jaws 152 to rotate, and drive the tool bit through the chuck jaws 152 to operate.

When the screwdriver is switched from the drilling mode to the auto chuck mode through the mode selection mechanism, the locking component 130 moves toward the first body 151a (moves backward) from the second locking position to the first locking position to lock the first body 151a. At the same time, the output gear ring 1582 moves away from the first body 151a and toward the nut cover 154 (moves forward) from the first operating position to the second operating position to be separated from the locking component 130 (the internal gear ring lock) and rotatably connected to the nut cover 154. Preferably, the locking coupling portion is a lock block 1510 disposed on the first body 151a, and the main body lock is provided with a second locking member coupled to the locking coupling portion. Preferably, the second locking member is the through groove 1340. That is, the locking component 130 (the main body lock) is coupled to the lock block 1510 by the through groove 1340 to lock the first body 151a. Therefore, in the auto chuck mode, when the locking component 130 is located in the first locking position and the output gear ring 1582 is in the second operating position, the locking component 130 circumferentially locks the main body 151 and the chuck jaws 152, and the output gear ring 1582 drives the nut cover 154 to rotate relative to the chuck jaws 152.

Referring to FIG. 1 and FIG. 6, in this embodiment, in the auto chuck mode, to ensure that the chuck jaws 152 do not continue to close or open after the chuck jaws 152 are closed or opened in place. That is, the nut cover 154 no longer applies a torsion force to the chuck jaws 152. A clutch mechanism 20 for interrupting torque transmission between the output gear ring 1582 and the nut cover 154 after the chuck jaws 152 are clamped or fully opened is disposed between the output gear ring 1582 and the nut cover 154. The clutch mechanism 20 includes a first clutch member 21 rotatably connected to the output gear ring 1582, a second clutch member 22 that is rotatably connected to the nut cover 154 and is axially movable relative to the nut cover 154, and a clutch elastic member 23. When the chuck jaws 152 are clamped or fully opened, the second clutch member 22 axially moves forward, the first clutch member 21 is disengaged from the second clutch member 22, and the output gear ring 1582 no longer transmits torque to nut cover 154. Preferably, the first clutch member 21 is a snap ring sleeved on the periphery of the main body 151. An end, close to the output gear ring 1582, of the snap ring is provided with engagement teeth 211 matching the inner teeth of the output gear ring 1582 to implement torque transmission, and an end, close to the second clutch member 22, of the snap ring is provided with clutch movable end teeth 212 for performing torque transmission with the second clutch member 22. The second clutch member 22 is provided with clutch stationary end teeth 222 cooperating with the clutch movable end teeth 212, and a front end of the second clutch member 22 is provided with the clutch elastic member 23, so that after the chuck jaws 152 are clamped or fully opened, that is, when a torsion force between the first clutch member 21 and the second clutch member 22 increases to a predetermined value, the second clutch member 22 compresses the clutch elastic member 23, so that the clutch movable end teeth 212 is disconnected from the clutch stationary end teeth 222. After the second clutch member 22 is disengaged from the first clutch member 21, the second clutch member 22 moves backward under the action of the clutch elastic member 23, that is, automatically resets and pushes the second clutch member 22 to a position in which the clutch movable end teeth 212 and the clutch stationary end teeth 222 are engaged. Therefore, when the chuck jaws 152 are clamped or fully opened, the clutch mechanism 20 performs repeated automatic tripping actions.

Referring to FIG. 1, the clutch movable end teeth 212 and the clutch stationary end teeth 222 include guide inclined surfaces (not shown in the figure), and the second clutch member 22 can compress the clutch elastic member 23 to separate the first clutch member 21 from the second clutch member 22 by the guide inclined surfaces. It should be noted that when the chuck jaws 152 are clamped or fully opened, the guide inclined surfaces also make the first clutch member 21 to tend to move toward the motor. That is, the first clutch member 21 is subject to a backward axial force to prevent the first clutch member 21 from moving backward to abut against the output gear ring 1582 (it should be noted that when the output gear ring 1582 is subject to an axial force from the first clutch member during tripping, that is, the output gear ring 1582 is subject to a clutch force, the output gear ring 1582 also provides an axial force to the mode selection mechanism that drives the output gear ring to move, for example, providing an axial force to an operating member that drives the output gear ring 1582 to move, so that the operating member is stressed). The screwdriver 10 further includes an axial abutment member that axially abuts against the first clutch member 21. Preferably, the axial abutment member is a third flange 1514 (referring to FIG. 7) disposed on the main body 151.

It may be learned from FIG. 3 and FIG. 4 that, in this embodiment, the clutch mechanism is at least partially overlapped with the chuck jaws in the axial direction of the drive shaft. It should be noted that because the chuck jaws are movable in the axial direction of the drive shaft between a front-end position and a rear-end position, the overlap of the chuck jaws in the axial direction of the drive shaft described in this embodiment is the overlap with the chuck jaws at any position in an area between the front-end position and the rear-end position. Specifically, referring to FIG. 4, when the chuck jaws 152 are in the rear-end position, a projection location of an end, close to the motor, of the chuck jaw in the axial direction of the drive shaft is N1, and when the chuck jaws move to the front-end position, a projection location of an end, away from the motor, of the chuck jaw in the axial direction of the drive shaft is N2. In this embodiment, the at least partial overlap of the clutch mechanism and the chuck jaws 152 in the axial direction of the drive is that the clutch mechanism is at least partially located in a span area K located between N1 and N2 in the axial direction of the drive shaft. In this embodiment, the clutch mechanism and the chuck jaws 152 at least partially overlap in the axial direction of the drive shaft 1325, so that the clutch mechanism occupies a relatively short axial length in the axial direction.

Referring to FIG. 5, preferably, in this embodiment, a distance L1 between an end face, close to the chuck assembly, of the motor and an end face, away from the motor, of the main body 151 is between 80 mm and 95 mm, so that the main body structure is relatively compact. It should be noted that "an end face, close to the chuck assembly, of the motor" in this embodiment may be specifically an end face, facing the chuck assembly, of a front bearing 1210 supported at an end, close to the chuck assembly, of the motor.

In addition, it may be learned from the description of the first support member 1327 and the support portion 1124 that the first support member 1327 is located in the accommodating cavity 1515 of the main body, so that the first support member 1327 does not increase a radial distance of the chuck assembly. Preferably, in this embodiment, a length of an outer diameter size of the chuck assembly is less than or equal to 60 mm, preferably, h is 52 mm.

It may be learned from the description of the operating principle of the electric screwdriver in the drilling mode and the auto chuck mode that, referring to FIG. 5, in the chuck adjustment mode, the main body 151 is fixedly disposed relative to the housing, and the first clutch member 21 and the second clutch member 22 in the engaged state are capable of transmitting a rotational power of the motor to the adjustment member, so that the adjustment member is rotatable relative to the main body. Referring to FIG. 6, when a rotation force transmitted between the first clutch member 21 and the second clutch member 22 reaches a predetermined value (that is, after the chuck is clamped or opened in place), at least one of the first clutch member 21 and the second clutch member 22 moves against the force of the clutch elastic member 23 to disconnect the first clutch member 21 from the second clutch member 22, thereby disconnecting the drive shaft 1325 from the adjustment member in the rotation direction. In the drilling mode, the first clutch member 21 and the second clutch member 22 cannot transmit the rotational power of the motor to the adjustmentmember, and the main body 151 is connected to the motor in the rotation direction and drives the chuck jaws 152 and the adjustment member to rotate to drive the tool bit to operate. Therefore, regardless of whether the electric screwdriver is in the drilling mode or the auto chuck mode, the first clutch member 21 and the second clutch member 22 remain engaged under the action of the clutch elastic member 23, and only when the chuck jaws are fully opened or closed, the second clutch member 22 overcomes the force of the clutch elastic member 23 and is separated from the first clutch member. Therefore, the degree of engagement between the first clutch member 21 and the second clutch member and a tripping force are mainly affected by the clutch elastic member 23, and the magnitude of the clutch "tripping" force is relatively constant. That is, the magnitude of a predetermined rotation force at which the first clutch member and the second clutch member are separated is relatively stable.

It may be learned from the description that the clutch mechanism 20 includes the first clutch member 21, the second clutch member 22, and the clutch elastic member 23. In the drilling mode, the first clutch member 21 and the second clutch member 22 are engaged with each other under the force of the clutch elastic member 23. In the chuck adjustment mode, the clutch mechanism is capable of transmitting the rotational power of the motor to the adjustment member, so that the adjustment member is rotatable relative to the main body 151. When the rotation force transmitted between the first clutch member 21 and the second clutch member 22 reaches the predetermined value, at least one clutch member of the clutch mechanism is movable axially along the motor shaft against the force of the clutch elastic member 23 to disengage the first clutch member 21 from the second clutch member 22, thereby interrupting the power transmission from the motor to the adjustment member.

In this embodiment, the second clutch member 22 and the adjustment member remain connected without relative rotation in the rotation direction. When the power tool is in the auto chuck mode, the clutch mechanism is capable of transmitting the rotational power of the motor to the adjustment member, so that the adjustment member is rotatable relative to the main body 151. When the rotation force transmitted between the first clutch member 21 and the second clutch member 22 reaches the predetermined value, the first clutch member 21 is disengaged from the second clutch member 22, thereby interrupting the power transmission from the motor shaft to the adjustment member. It may be learned that when the first clutch member and the second clutch member are in the engaged state, the first clutch member and the second clutch member are connected to the adjustment member in the rotation direction in both the auto chuck mode and the drilling mode. Certainly, in another embodiment, the clutch mechanism may be alternatively disposed as that the first clutch member 21 and the second clutch member 22 in the engaged state remain connected to the drive shaft 1325 in the rotation direction.

In addition, in this embodiment, the adjustment member is an adjustment ring (the nut cover) sleeved outside a plurality of chuck jaws. That is, the chuck jaw is provided with an external thread, and the nut cover is provided with an internal thread. Certainly, in another embodiment, the adjustment member may be used for being at least partially located in an area surrounded by the chuck jaws, the chuck jaws 152 are provided with internal threads, and the adjustment member is provided with an external thread.

It may be learned from the description of this embodiment that the clutch mechanism is capable of transmitting the power of the drive shaft 1325 to the adjustment member in the auto chuck mode based on a specific auto chuck embodiment. In another implementation, the auto chuck embodiment may also be that the adjustment member is fixedly disposed relative to the housing, the chuck jaws 152 rotates relative to the adjustment member, and the clutch mechanism is used for connecting the adjustment member and the housing. Preferably, one clutch member of the clutch mechanism is connected to the adjustment member without relative rotation, and the other clutch member is connected to the housing or the motor in a rotation direction. In the chuck adjustment mode, the first clutch member and the second clutch member are engaged with each other. When torque between the first clutch member and the second clutch member reaches a predetermined value, one clutch member of the clutch mechanism is movable relative to the other clutch member against a force of the clutch elastic member to disengage the two clutch members, so that there is no relative rotation between the adjustment member and the plurality of chuck jaws 152.

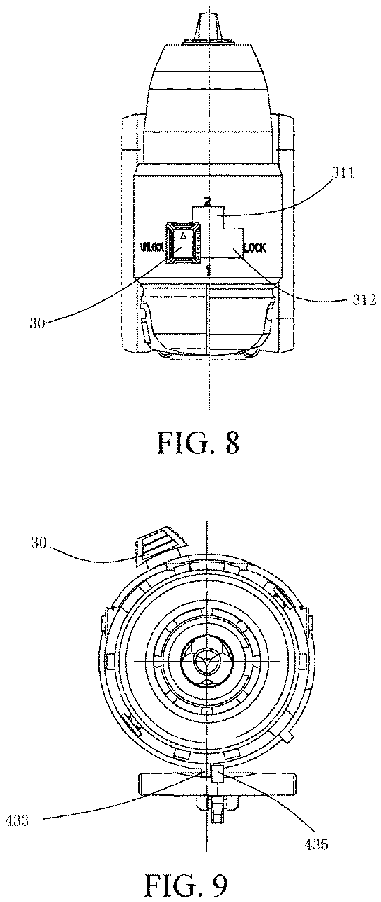

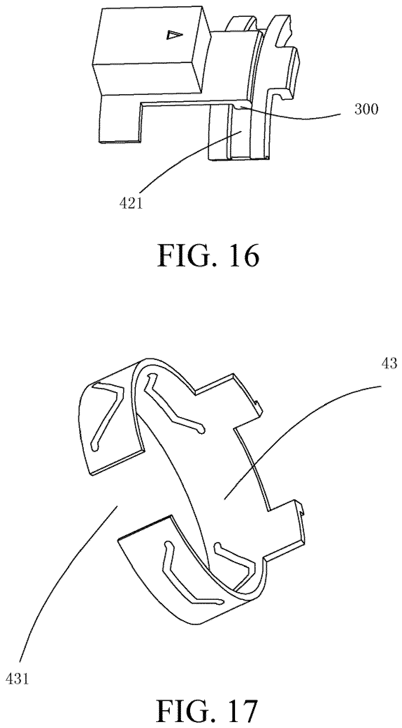

In this embodiment, the operating member 30 of the mode selection mechanism and the structure associated with the operating member 30 are further described below with reference to FIG. 8 to FIG. 23. It may be learned from the description of the "tripping" principle of the clutch mechanism 20 in the auto chuck mode that under the action of the clutch elastic member 23, the clutch stationary end teeth 222 is repeatedly engaged and disengaged from the clutch movable end teeth 212, resulting in relatively loud noise. Particularly, when a rotation speed is relatively high, the sound is very strident. In this embodiment, a sliding groove is provided in the mode selection mechanism for the movement of the operating member 30, so that the screwdriver can be in the auto chuck mode only in the low speed mode. Referring to FIG. 8 to FIG. 13, the sliding groove has a first sliding groove 311 for switching the operating member between a high-speed position and a low-speed position in the drill operation mode. When the operating member 30 slides between the high-speed position and the low-speed position, the operating member 30 is capable of driving the second internal gear ring 1322 to correspondingly move between the first reduction position and the second reduction position. Furthermore, the sliding groove further includes a second sliding groove 312 for switching to the auto chuck mode. The second sliding groove 312 is connected to a corresponding low-speed position in the first sliding groove 311, so that the operating member 30 is movable along the second sliding groove 312 only in the low-speed position for switching from the drilling mode to the auto chuck mode. Preferably, the second sliding groove 312 has two sections that are respectively disposed on two sides of the first sliding groove 311, namely, a chuck groove 3121 for clamping the chuck jaws 152 in the auto chuck mode and an opening groove 3122 for opening the chuck jaws. Preferably, the first sliding groove 311 extends in the axial direction of the motor shaft 121 in the housing, and the second sliding groove 312 is distributed on both sides of the first sliding groove 311 and is substantially perpendicular to the first sliding groove 311. Therefore, the sliding groove is generally a "T" shaped groove structure in the housing.

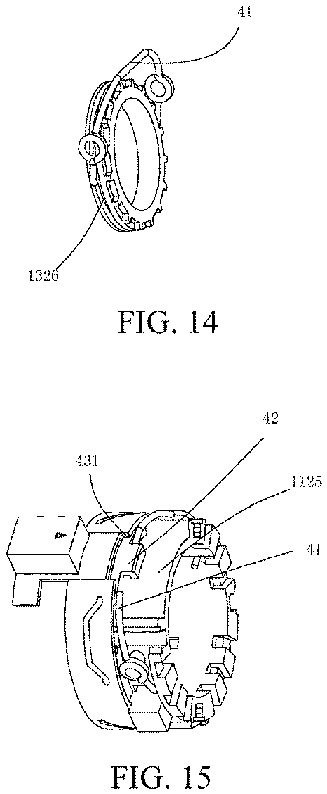

Referring to FIG. 14 to FIG. 16, in this embodiment, in the drilling mode, the operating member 30 drives the second internal gear ring 1322 through a connecting assembly in the housing to move between the first reduction position and the second reduction position. Preferably, the connecting assembly includes an arc-shaped shift steel wire 41 and a slide member 42 that connects the shift steel wire 41 to the operating member 30 and is axially movable under the drive of the operating member 30. Two free ends of the shift steel wire 41 are respectively located in an annular groove 1326 of the second internal gear ring 1322, to drive the second internal gear ring 1322 through the shift steel wire 41 to move. To enable the slide member 42 to move along a predetermined path within the housing, the gearbox housing is provided with a slide rail 1125 for the axial movement of the slide member 42. Preferably, the slide member 42 is disposed between the two free ends of the shift steel wire 41, and the shift steel wire 41 is pivotally connected to the gearbox housing at a position between the free ends and at the slide member 42. In this embodiment, the operating member 30 and the slide member 42 may be relatively rotatable. That is, the operating member 30 is rotatable relative to the slide member 42, to enable the screwdriver to be switched from the drilling mode to the auto chuck mode. Preferably, the slide member 42 is provided with an arc-shaped groove 421 in the circumferential direction. The front end of the operating member 30 is provided with a guide block 300 matching the arc-shaped groove. When the operating member 30 is switched between the high-speed position and the low-speed position, the guide block 300 drives the slide member 42 through the arc-shaped groove 421 to move axially. When the operating member rotates in the low-speed position, that is, the operating member 30 moves along the second sliding groove in the low-speed position, the guide block 300 is rotatable in the arc-shaped groove 421, to enable the operating member 30 to rotate relative to the slide member 42.

Preferably, the mode selection mechanism further includes a switching ring 43, a guide member (not shown in the figure), and a push rod assembly 45 that are sleeved outside the gearbox housing and are capable of being driven by the operating member 30 to rotate and the locking component 130 that can lock both the main body 151 and the output gear ring 1582. Preferably, the switching ring 43 is provided with a slot 431, so that the operating member 30 is movable axially along the slot 431, to be switched between the high-speed position and the low-speed position in the drilling mode. When the operating member 30 moves along the second sliding groove in the low-speed position, that is, the operating member 30 circumferentially rotates, the operating member 30 circumferentially abuts against the switching ring 43 during rotation, to enable the switching ring 43 to rotate together. The switching ring 43 is provided with a first guide groove 4321 and a second guide groove 4322. The push rod assembly 45 includes a first push rod assembly 451 connected to the locking component 130 and a second push rod assembly 452 connected to the output gear ring 1582. Preferably, the guide member is a switching pin shaft. The switching pin shaft including a first switching pin shaft 4514 connecting the first push rod assembly 451 to the first guide groove 4321 and a second switching pin shaft 4524 connecting the second push rod assembly 452 to the first guide groove 4322.

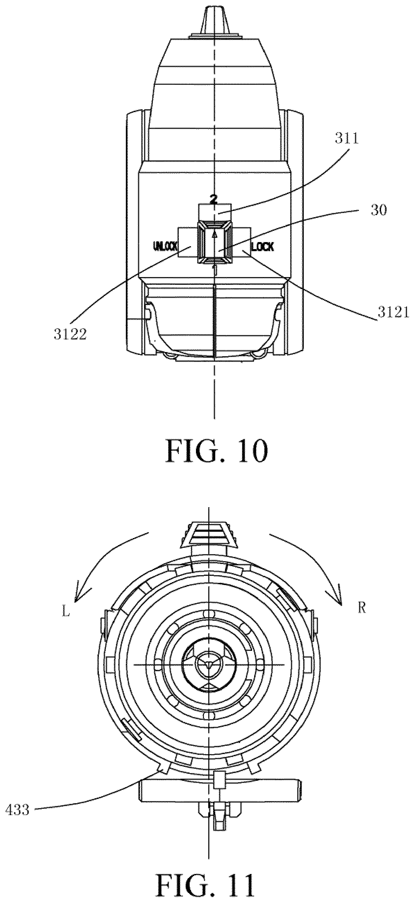

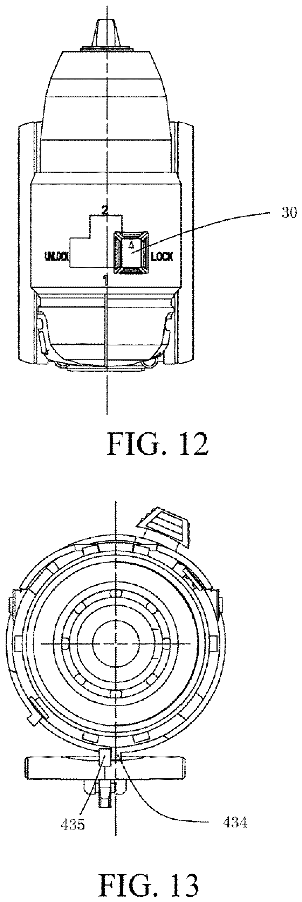

Referring to FIG. 8 to FIG. 11 and FIG. 18 to FIG. 21, when the operating member 30 is switched from a position shown in FIG. 10 to a position shown in FIG. 8, that is, from a low-speed state in the drilling mode to an open state of the chuck jaws 152 in the auto chuck mode, the switching ring 43 rotates together with the operating member 30 in the direction of an arrow L in FIG. 11 under the action of the operating member 30. The first guide groove 4321 on the switching ring 43 drives the locking component 130 through the first switching pin shaft 4514 and the first push rod assembly 451 to move axially backward, and the second guide groove 4322 on the switching ring 43 drives the output gear ring 1582 through the second switching pin shaft 4524 and the second push rod assembly 452 to move axially forward, to fix the main body 151 and rotatably connect the output gear ring 1582 to the nut cover 154. Preferably, in this embodiment, the switching ring 43 is further provided with an open trigger member 433 and a locking trigger member 434. After the output gear ring 1582 and the locking component 130 move to a predetermined position, the open trigger member 433 triggers a motor reversing switch 435 to enable the motor to drive the nut cover 154 to rotate in a predetermined direction to open the chuck jaws 152. Referring to FIG. 10 to FIG. 12 and FIG. 19 to FIG. 21, when the operating member 30 is switched from the position shown in FIG. 10 to a position shown in FIG. 12, that is, from the low speed state in the drilling mode to a closed state of the chuck jaws 152 in the auto chuck mode, after the switching ring 43 rotates in place, the motor reversing switch 435 is triggered by the locking trigger member 434 connected to the switching ring, so that the motor drives the nut cover 154 to rotate in the predetermined direction to close the chuck jaws 152. The principle of closing the chuck jaws is basically the same as that of opening the chuck jaws 152. Details are not described herein again.

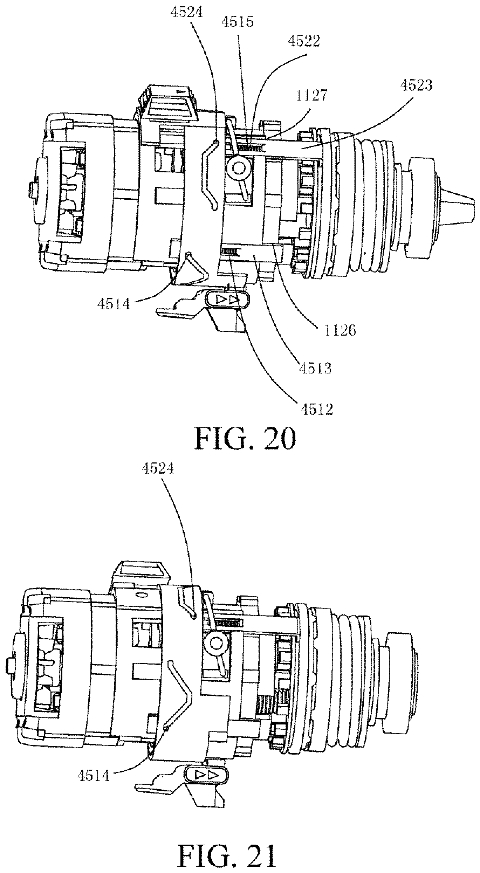

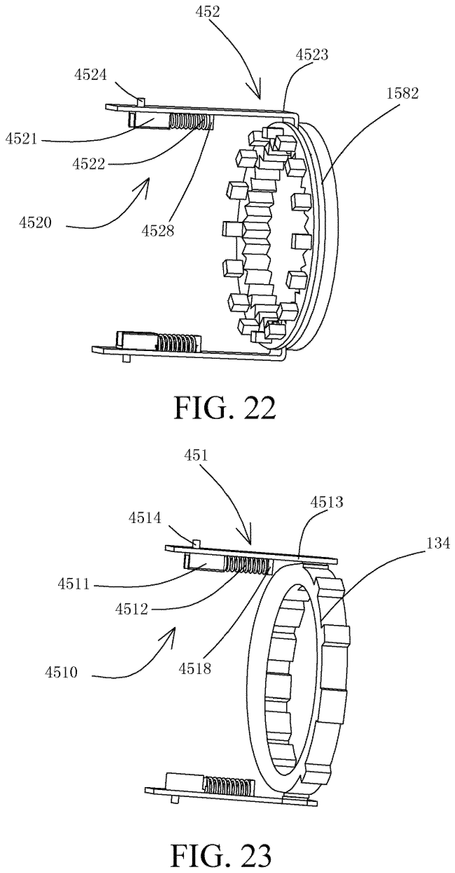

Referring to FIG. 23, preferably, the first push rod assembly 451 includes a first connecting rod 4513 connected to the first switching pin shaft 4514, and is connected to the locking component 130 by the first connecting rod 4513, to drive the locking component 130 to move axially forward and backward. Preferably, the first push rod assembly 451 further includes a first self-aligning component 4510. The first self-aligning component 4510 includes a first push rod 4511 connected to the first switching pin shaft 4514 and a first elastic component 4512 that is disposed at a front end of the first push rod 4511 and is located between the first push rod 4511 and the first connecting rod 4513. When moving forward, the first switching pin shaft 4514 can push the first connecting rod 4513 through the first push rod 4511 and the first elastic component 4512 located at the front end of the first push rod 4511 to move forward. Preferably, a first stop member 4518 (referring to FIG. 1 and FIG. 23) radially extends from the first connecting rod 4513 in front of the first elastic component 4512, and the first elastic component 4512 abuts against the first stop member 4518. The first connecting rod 4513 is provided with an axially extending connecting rod notch 4515 (referring to FIG. 20), and the first switching pin shaft 4514 penetrates the connecting rod notch 4515, so that when moving backward under the action of the first guide groove 4321, the first switching pin shaft 4514 is capable of driving the first connecting rod 4513 to move backward and providing a movement space for the first switching pin shaft 4514 when the first switching pin shaft 4514 moves forward. The second push rod assembly 452 includes a second connecting rod 4523 connected to the second switching pin shaft 4524, and is connected to the output gear ring 1582 by the second connecting rod 4523, to drive the output gear ring 1582 to move axially forward and backward.

Referring to FIG. 22, preferably, the second push rod assembly 452 further includes a second self-aligning component 4520. The second self-aligning component 4520 includes a second push rod 4521 connected to the second switching pin shaft 4524 and a second elastic component 4522 that is disposed at a front end of the second push rod 4521 and is located between the second push rod 4521 and the second connecting rod 4523. When moving forward, the second switching pin shaft 4524 can push the second connecting rod 4523 through the second push rod 4521 and the second elastic component 4522 located at the front end of the second push rod 4521 to move forward. A second stop member 4528 (referring to FIG. 1) radially extends from the second connecting rod 4523 in front of the second elastic component 4522, and the second elastic component 4522 abuts against the second stop member 4528. The second connecting rod 4523 is provided with an axially extending second connecting rod notch 4525 (referring to FIG. 1), and the second switching pin shaft penetrates the second connecting rod notch 4525, so that when moving backward under the action of the second guide groove 4322, the second switching pin shaft 4524 is capable of driving the second connecting rod 4523 to move backward and providing a movement space for the second switching pin shaft 4524 when the second switching pin shaft 4524 moves forward. In this embodiment, the first push rod assembly 451 is provided with the first self-aligning component 4510, so that when a "tooth jacking" phenomenon occurs in the process of the locking component 130 moving forward and being engaged with the output gear ring 1582. After the output gear ring 1582 rotates by a specific angle, the locking component 130 and the output gear ring 1582 are smoothly engaged in place by the first self-aligning component 4510. It may be understood that the second push rod assembly 452 is provided with the second self-aligning component 4520, so that when the "tooth jacking" phenomenon occurs in the process of the output gear ring 1582 moving forward and being engaged with the engagement teeth 211 of the first clutch member 21. After the output gear ring 1582 rotates by a specific angle, the output gear ring 1582 and the engagement teeth 211 are smoothly engaged in place by the second self-aligning component 4520.

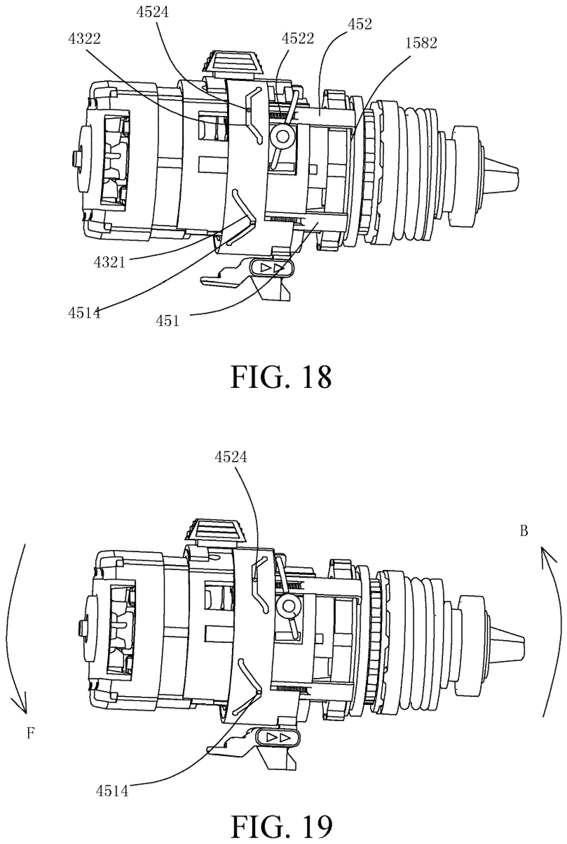

Referring to FIG. 18 to FIG. 21, FIG. 18 and FIG. 19 are state diagrams of correspondences between the switching ring 43 and the switching pin shafts in the drilling mode, the screwdriver in FIG. 18 is in a high-speed state, and the screwdriver in FIG. 19 is in a low-speed state. FIG. 20 and FIG. 21 are state diagrams of correspondences between the switching ring 43 and the switching pin shafts in the auto chuck mode. That is, FIG. 19 is a state diagram corresponding to FIG. 10, FIG. 20 is a state diagram corresponding to FIG. 8, and FIG. 21 is a state diagram corresponding to FIG. 12. When the operating member 30 is switched from FIG. 10 to FIG. 8, the switching ring 43 rotates from the state shown in FIG. 19 in the direction of an arrow B in FIG. 19 to the state shown in FIG. 20. In this case, the first guide groove 4321 drives the first push rod 4511 through the first switching pin shaft 4514 to move forward. When the first push rod 4511 moves forward, the first push rod 4511 compresses the first elastic component 4512 and presses against the first connecting rod 4513 through the first elastic component 4512 to drive the locking component 130 through the first connecting rod 4513 to move forward. The second guide groove 4322 drives the second push rod 4521 through the second switching pin shaft 4524 to move backward, and the second push rod 4521 or the second switching pin shaft 4524 drives the second connecting rod 4523 to move backward. When the switching ring 43 rotates in the direction of an arrow F in FIG. 19 from the state shown in FIG. 19 to the state shown in FIG. 21, the first guide groove 4321 drives the first push rod 4511 through the first switching pin shaft 4514 to move forward. When the first push rod 4511 moves forward, the first push rod 4511 compresses the first elastic component 4512 and presses against the first connecting rod 4513 through the first elastic component 4512 to drive the locking component 130 through the first connecting rod 4513 to move forward. Referring to FIG. 20, preferably, the outer side of the gearbox housing is provided with an axially extending first groove 1126, and the first push rod 4511 and the first elastic component 4512 are located in the first groove 1126 and is therefore axially movable along the first groove 1126, and the first connecting rod 4513 is located in the first groove 1126 and covers the first push rod 4511 and the first elastic component 4512. The outer side of the gearbox housing is further provided with an axially extending second groove 1127, and the second push rod 4521 and the second elastic component 4522 are located in the second groove 1127 and is therefore axially movable along the second groove 1127, and the second connecting rod 4523 is located in the second groove 1127 and covers the second push rod 4521 and the second elastic component 4522. Preferably, there are at least two groups of the first push rod assemblies 451 and the second push rod assemblies 452.

It may be understood that, in another embodiment, alternatively, the first switching pin shaft 4514 may be directly and fixedly connected to the first connecting rod 4513, so that the axial movement of the first switching pin shaft 4514 directly drives the axial movement of the first connecting rod 4513. However, compared with a case that the first switching pin shaft 4514 is connected to the first self-aligning component 4510, when the first switching pin shaft 4514 moves forward, the first connecting rod 4513 is pushed forward by the first push rod 4511 abutting against the first elastic component 4512 and further by the first elastic component 4512. In the manner, after the operating member 30 is operated in place, if a slot 1340 in the locking component 130 is not engaged with the lock block 1510 on the first body 151a in place. That is, the "tooth jacking" phenomenon occurs. Because of the presence of the first elastic component 4512, after the main body 151 rotates, the compressed first elastic component 4512 continues to push the first connecting rod 4513, so that the slot 1340 of the locking component 130 is engaged with the lock block 1510 on the first body 151a again.

### Second Embodiment

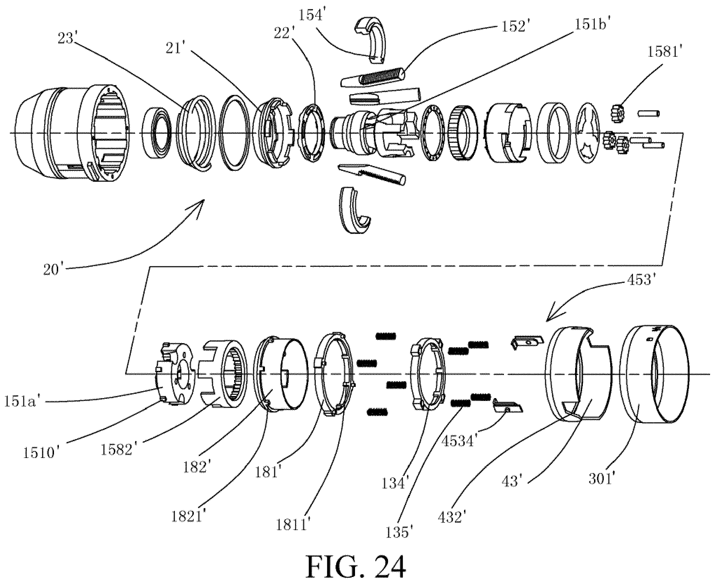

FIG. 24 to FIG. 26 show a screwdriver 10' according to a second embodiment of the present invention. This embodiment discloses another manner in which it is implemented that, in an auto chuck mode, a main body 151' is rotatably fixed by a main body lock 134', and an output gear ring 1582' drives a nut cover 154' to rotate. In a drilling mode, the main body lock 134' releases the fixation on the main body 151', the output gear ring 1582' is fixed relative to a housing, the main body 151' drives chuck jaws 152' to rotate under the drive of a motor, to drive a tool bit to rotate, and the output gear ring 1582' does not need to move axially during mode switching, so that the output gear ring 1582' can be stably fixed in the housing, and the output of the screwdriver 10' is more stable.

An operating member in this embodiment is different from the first embodiment in that the operating member includes a mode selection member 301' for mode switching and a speed operating member (not shown in the figure) for speed adjustment in the drilling mode, and a mode selection mechanism includes the mode selection member 301', a switching ring 43', the main body lock 134' for locking the main body, a third switching pin shaft 4534', a third push rod assembly 453', a connecting member 182', and an internal gear ring lock 181'. Same as the case in the first embodiment, the main body lock 134' remains circumferentially nonrotatably fixed to the housing but is movable axially relative to the housing, to be switched between a first locking position and a second locking position. The main body lock 134' moves axially to implement the switching of the main body lock 134' between the first locking position and the second locking position. A first body 151a' is provided with a locking coupling portion coupled to the main body lock 134', the first locking position is close to the locking coupling portion of the first body 151a' and is coupled to the locking coupling portion, and the second locking position is far away from the locking coupling portion of the first body 151a' and is separated from the locking coupling portion. The locking coupling portion is a lock block 1510 disposed on the first body 151a'. When the screwdriver is in the auto chuck mode and the main body lock 134' is located in the first locking position, the main body lock 134' circumferentially nonrotatably locks the main body 151' to the housing by being engaged with the lock block 1510'. In the drilling mode, when the main body lock 134' is located in the second locking position, the main body lock 134' releases the circumferential locking of the first body 151a', and an output planetary gears 1581' is capable of driving the main body 151' and the chuck jaws 152' clamping the tool bit to rotate together.

Preferably, the mode selection member 301' is a rotating ring sleeved outside the housing, the switching ring 43' is rotatably connected to the mode selection member 301', and the switching ring 43' is provided with a third guide groove 432'. It may be understood that, in another embodiment, the switching ring 43' and the mode selection member 301' may further be integrally formed. That is, the guide groove 432' is provided in the inner wall of the switching ring 43'. The guide groove 432' is used for driving the third push rod assembly 453' through the third switching pin shaft 4534' to implement axial movement. One end of the third push rod assembly 453' is movably disposed in the third guide groove 432' by the third switching pin shaft 4534', and the other end is connected to the connecting member 182' for driving the connecting member 182' to move axially. The connecting member 182' is movable between a first switching position close to the internal gear ring lock 181' and a second switching position far away from the internal gear ring lock 181', and the connecting member 182' remains rotatably connected to the output gear ring 1582' during axial movement. The internal gear ring lock 181' is circumferentially nonrotatably fixed relative to the housing. When the connecting member 182' is in the first switching position, the connecting member 182' is rotatably connected to the internal gear ring lock 181' and limits the rotation of the output gear ring 1582' through the internal gear ring lock 181'. That is, the output gear ring 1582' is circumferentially fixed relative to the housing. In the second switching position, the connecting member 182' is axially separated from the internal gear ring lock 181', and the output gear ring 1582' is capable of driving the connecting member 182' to rotate together.

In this embodiment, the main body lock 134' is movable to a corresponding position while the mode selection member 301' enables the third push rod assembly 453' to drive the connecting member 182' to move. Preferably, the main body lock 134' axially abuts against the connecting member 182' and is further provided with a third elastic component 135' between an end, away from the output gear ring 1582', of the main body lock 134' and the housing. When the connecting member 182' moves axially, the connecting member 182' no longer axially abuts against the main body lock 134', and the main body lock 134' is axially movable under the action of the third elastic component 135'. When the connecting member 182' moves reversely, the connecting member 182' pushes the main body lock 134' back to the corresponding position against the force of the third elastic component 135'.

The principle of switching the screwdriver 10' between the drilling mode and the auto chuck mode is further described below with reference to FIG. 24 to FIG. 26.

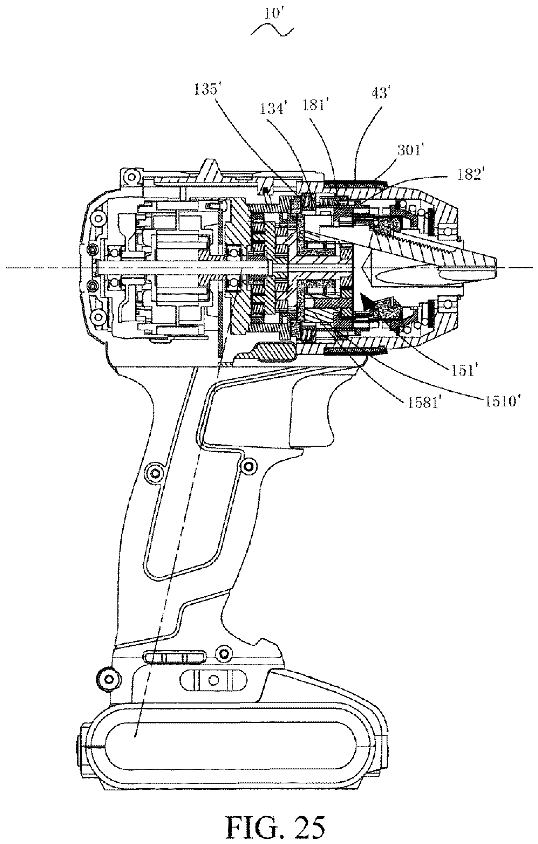

Referring to FIG. 25, when the screwdriver is in the drilling mode, the main body lock 134' is located at the second locking position far away from the locking coupling portion of the first body 151a' and separated from the locking coupling portion, and the main body lock 134' is separated from the first body 151a', that is, the main body lock 134' does not lock the first body 151a', so that the main body 151' is rotatably disposed in the housing. In addition, the connecting member 182' is located in a first switching position close to the internal gear ring lock 181', and the connecting member 182' is engaged with gear ring fixing teeth 1811' on the inner circumferential wall of the internal gear ring lock 181' by lock teeth 1821' (referring to FIG. 24) located on the periphery of the connecting member, and the output gear ring 1582 ' is nonrotatably fixed to the housing. Therefore, in this mode, the output planetary gears 1581' drives the main body 151' and the chuck jaws 152' to rotate, and further drives the tool bit located in the chuck jaws 152' to operate.

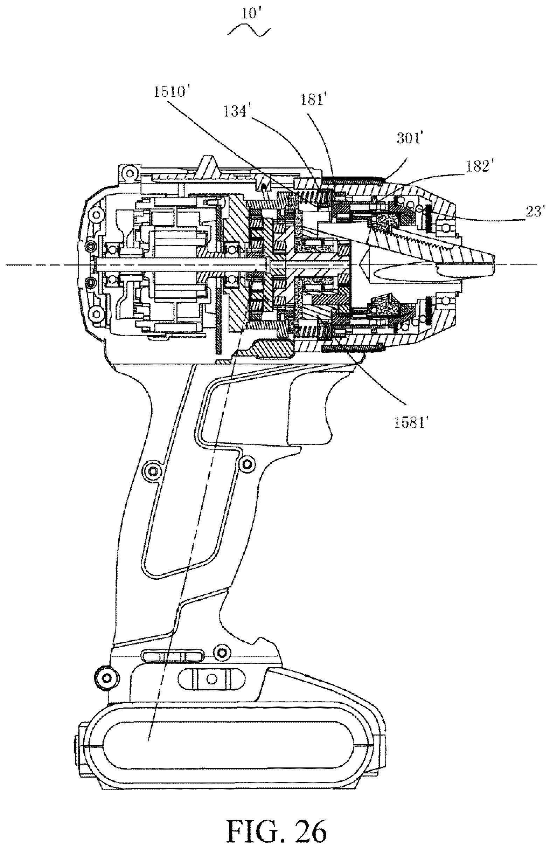

When the mode selection member 301' is rotated to the auto chuck mode, that is, the screwdriver 10' is switched from the state shown in FIG. 25 to the state shown in FIG. 26, the mode selection member 301' drives the switching ring 43' to rotate, and the third push rod assembly 453' drives the connecting member 182' to move away from the internal gear ring lock 181' under the action of the third guide groove 432' of the switching ring 43'. That is, the connecting member 182' moves forward from the first switching position to the second switching position, the lock teeth 1821' on the periphery of the connecting member 182' are disengaged from the internal gear ring fixing teeth 1811' on the inner circumferential wall of the internal gear ring lock 181', and the output gear ring 1582 ' is capable of driving the connecting member 182' to rotate together relative to the housing. It should be noted that when the connecting member 182' moves forward from the first switching position to the second switching position, the connecting member 182' is simultaneously rotatably connected to the nut cover 154', so that the rotation of the output gear ring 1582' is capable of driving the nut cover 154' to rotate. Because the connecting member 182' axially abuts against the main body lock 134', when the connecting member 182' moves forward from the first switching position to the second switching position, the main body lock 134' moves from the first locking position far away from the first body to the second locking position close to the first body 151a' under the action of the third elastic component 135'. The main body lock 134' is engaged with a lock block 1510' on the first body 151a' by planetary carrier lock teeth (not shown in the figure) on an inner circumferential wall of the main body lock to lock the first body 151a'. Therefore, in this mode, the output gear ring 1582' is rotatable relative to the fixed first body 151a' and the chuck jaws 152' through the connecting member 182', thereby implementing the opening action or closing action of the chuck jaws 152'.

While continuing to rotate a mode operating member, when the screwdriver is switched from the auto chuck mode to the drilling mode, the mode selection member 301' drives the switching ring 43' to rotate, and the rotation of the switching ring 43' enables the third push rod assembly 453' to overcome an elastic force of the third elastic component 135', to drive the connecting member 182' and the main body lock 134' abutting against the connecting member 182' to move backward together, so that the screwdriver returns to a drilling mode state. Preferably, to enable the connecting member 182' to move backward from the second switching position to the first switching position, the lock teeth 1821' on the periphery of the connecting member 182' can be smoothly engaged with the internal gear ring fixing teeth 1811' of the internal gear ring lock 181', and the rear side of the internal gear ring lock 181 ' is provided with a fourth elastic component (not shown in the figure), so that when "tooth jacking" occurs between the lock teeth 1821' on the periphery of the connecting member 182' and the internal gear ring fixing teeth 1811' of the internal gear ring lock 181', the connecting member 182' compresses the fourth elastic component through the internal gear ring lock 181' to rotate, and the internal gear ring lock 181' is engaged in place after rotation.

In this embodiment, the power tool further includes a clutch mechanism 20' for interrupting torque transmission between the output gear ring 1582' and the nut cover 154' when the chuck jaws 152 are locked or opened. The clutch mechanism 20' includes a first clutch member 21' rotatably connected to the connecting member 182' after the connecting member 182' moves forward and a second clutch member 22' rotatably connected to the nut cover 154'. A clutch elastic member 23' is disposed between the first clutch member 21' and the housing at the front end of the first clutch member. When the chuck jaws 152' are locked or fully opened, the first clutch member 21' moves forward against an elastic force of the clutch elastic member 23', to interrupt the torque transmission between the first clutch member 21' and the second clutch member 22'.

It may be learned from the description of the second embodiment that the clutch mechanism 20' includes the first clutch member 21', the second clutch member 22', and the clutch elastic member 23'. In the drilling mode, the first clutch member 21' and the second clutch member 22' are engaged with each other under the force of the clutch elastic member 23'. In the chuck adjustment mode, the clutch mechanism is capable of transmitting a rotational power of a motor to an adjustment member, so that the adjustment member is rotatable relative to the main body 151'. When a rotation force transmitted between the first clutch member 21' and the second clutch member 22' reaches a predetermined value, at least one clutch member of the clutch mechanism is movable in the axial direction of the motor shaft against the force of the clutch elastic member 23', to disengage the first clutch member 21' from the second clutch member 22', thereby interrupting the power transmission from the motor to the adjustment member.

It should be noted that, in the second embodiment of the present invention, the output gear ring 1582' does not require axial movement during mode switching. That is, the output gear ring 1582' is relatively fixed relative to the housing in the axial direction of the motor shaft, and the mode selection member 301' operably moves between a first position and a second position to drive the connecting member 182' to move. Therefore, the connecting member 182' connects the output gear ring 1582' to the clutch members in the rotation direction in the chuck adjustment mode, and the connecting member 182' disconnects the output gear ring 1582' from the clutch members 21', 22' in the rotation direction in the drilling mode. Because inner circumferential teeth of the output gear ring 1582' need to be engaged with the outer ring teeth of the output planetary gears 1581', generally, a smaller engaging clearance between the inner circumferential teeth of the output gear ring 1582' and the outer ring teeth of the output planetary gears 1581' ensures more stable transmission. However, when the output gear ring 1582' needs to move axially, the engaging clearance needs to be increased. Otherwise, the axial movement of the output gear ring is hindered or difficult, resulting in poor transmission stability. In the second embodiment of the present invention, the axial movement of the connecting member182' is used in place of the axial movement of the output gear ring 1582' to avoid the problem of poor transmission stability.

### Third Embodiment

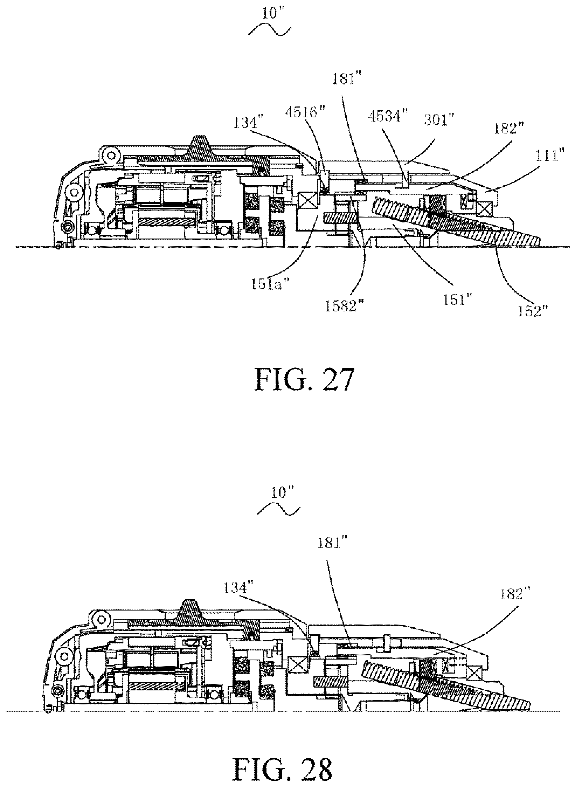

FIG. 27 to FIG. 30 are partial sectional views of a screwdriver 10" according to a third embodiment of the present invention. This embodiment discloses another manner of implementing the rotational fixation of a main body 151" through a main body lock 134" in an auto chuck mode, an output gear ring 1582" drives a nut cover 154" to rotate and the main body lock 134" releases the fixation of the main body 151" in a drilling mode, the output gear ring 1582" is fixed relative to a housing, and the main body 151" drives the chuck jaws 152" to rotate under the drive of a motor, to drive a tool bit to rotate.

In this embodiment, a mode selection mechanism includes a mode selection member 301", a switching ring (not shown in the figure) provided with a guide groove (not shown in the figure), a guide member, a connecting member 182", the main body lock 134", and an internal gear ring lock. Preferably, the mode selection member 301" is a rotating ring that is sleeved on the outside of the housing or a chuck housing, the guide member includes a third switching pin shaft 4534" for driving the connecting member 182" to move axially, and the guide groove includes a third guide groove 432" for the movement of the third switching pin shaft 4534". Preferably, in this embodiment, the switching ring and the mode selection member 301" are integrally formed. That is, a guide groove is provided in the inner circumferential surface of the mode selection member 301". One end of the third switching pin shaft 4534" is movably disposed in a third guide groove 432", and the other end is connected to the connecting member 182" to drive the connecting member 182" to move axially. The main body lock 134" is movable between a first locking position close to the first body 151a" and a second locking position far away from the first body 151a" but is circumferentially nonrotatably fixed relative to the housing. Same as the case in the second embodiment, in this embodiment, the connecting member 182" remains rotatably connected to the output gear ring 1582", the internal gear ring lock 181" is nonrotatably fixed to the housing, and the connecting member 182" moves axially to be engaged with or disengaged from the internal gear ring lock 181", so that the output gear ring 1582" is circumferentially fixed or circumferentially rotatable. That is, the connecting member 182" is movable between a first switching position close to the internal gear ring lock 181" and a second switching position far away from the internal gear ring lock 181", and the connecting member 182" remains rotatably connected to the output gear ring 1582" during the axial movement. The internal gear ring lock 181" is circumferentially nonrotatably fixed relative to the housing. In the first switching position, the connecting member 182" is rotatably connected to the internal gear ring lock 181" and limits the rotation of the output gear ring 1582" through the internal gear ring lock 181". That is, the output gear ring 1582" is circumferentially fixed relative to the housing. When the connecting member 182" is in the second switching position, the connecting member 182" is axially separated from the internal gear ring lock 181", the output gear ring 1582" is capable of driving the connecting member 182" to rotate together, and the connecting member 182" is rotatably connected to the nut cover 154".

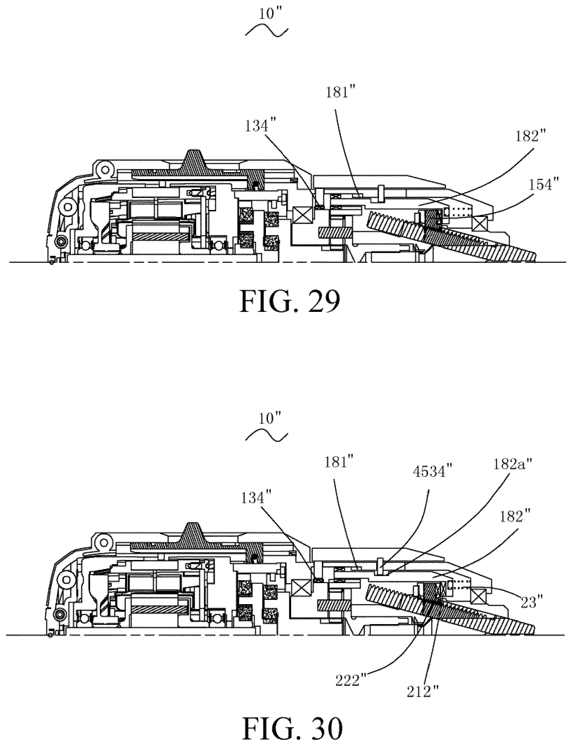

The main differences between this embodiment and the second embodiment are the structure and a manner of movement of the main body lock 134" in this embodiment. In this embodiment, the switching pin shaft further includes a fourth switching pin shaft 4516" that is connected to the main body lock 134" and is used for driving the main body lock 134" to move radially, and the guide groove further includes a fourth guide groove (not shown in the figure) for the movement of one end of the fourth switching pin shaft 4516". The other end of the fourth switching pin shaft 4516" is connected to the main body lock 134" and is used for driving the main body lock 134" to move radially, so that the main body lock 134" can lock and unlock the first body 151a". Preferably, in this embodiment, the fourth switching pin shaft 4516" and the main body lock 134" are integrally formed. Referring to FIG. 27, when the screwdriver 10" is in the drilling mode, the main body lock 134" is radially separated from the first body 151a", the internal gear ring lock 181" is rotatably connected to the output gear ring 1582" by the connecting member 182", and the connecting member 182" is separated from the nut cover 154". Therefore, in this mode, the rotation of the main body 151" is capable of driving the chuck jaws 152" and the tool bit located in the chuck jaws 152" to rotate together. Referring to FIG. 29, when the screwdriver 10" is in the auto chuck mode, the main body lock 134" is radially engaged with the first body 151a" to enable the main body 151" to be rotatably fixed relative to the housing, the internal gear ring lock 181" is separated from the output gear ring 1582" through the connecting member 182", and the connecting member 182" is rotatably connected to the nut cover 154". Therefore, in this mode, the output gear ring 1582" is capable of driving the connecting member 182" and the nut cover 154" to rotate together relative to the chuck jaws 152" in the main body 151" to enable the chuck jaws to open or close.

Referring to FIG. 28 and FIG. 29, when the screwdriver 10" is switched from the drilling mode to the auto chuck mode, the connecting member 182" is first disconnected from the internal gear ring lock 181" during movement, and the connecting member 182" is connected to the nut cover 154" as the connecting member 182" continues to move. In this case, the main body lock 134" is connected to the main body 151a". It should be noted that, in this embodiment, the clutch mechanism 20" disconnects the output gear ring 1582" from the nut cover 154" when the chuck jaws 152" is opened or locked. Different from the foregoing embodiment, in this embodiment, clutch movable end teeth 212" are fixedly connected to the connecting member 182", clutch stationary end teeth 212" are fixed to the nut cover 154", and a clutch elastic member 23" is disposed between the connecting member 182" and the housing. Referring to FIG. 30, in the auto chuck mode, the output gear ring 1582" drives the nut cover 154" through the connecting member 182", so that after the chuck jaws 152" are clamped or fully opened, the connecting member 182" abuts against the clutch elastic member 23", and the clutch movable end teeth 212" are separated from the clutch stationary end teeth 222". Preferably, during "tripping", the movement of the connecting member 182" does not result in the movement of the third switching pin shaft 4534" connected to the connecting member 182" and the mode operating member 301", the connecting member 182" is provided with an axially extending clutch groove 182a", to enable the connecting member 182" to be movable relative to the third switching pin shaft 4534" during "tripping". It should be noted that, as may be learned from the description of the operating principle of the screwdriver 10" switching between the drilling mode and the auto chuck mode and the switching principle of switching from the drilling mode to the auto chuck mode, a first clutch member (not shown in the figure) and a second clutch member (not shown in the figure) of the clutch mechanism 20" in this embodiment do not remain engaged. This is basically the same as the clutch mechanism described in the background art. The first clutch member and the second clutch member are engaged (that is, the clutch movable end teeth 212" are engaged with the clutch stationary end teeth 222") only in the auto chuck mode.

### Fourth Implementation

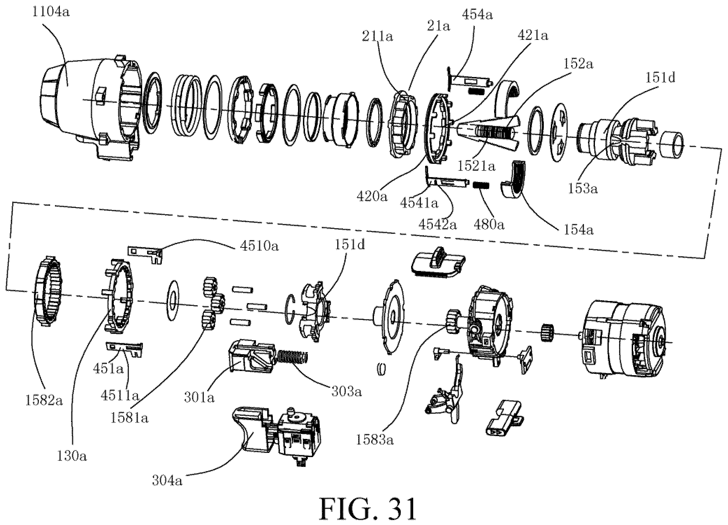

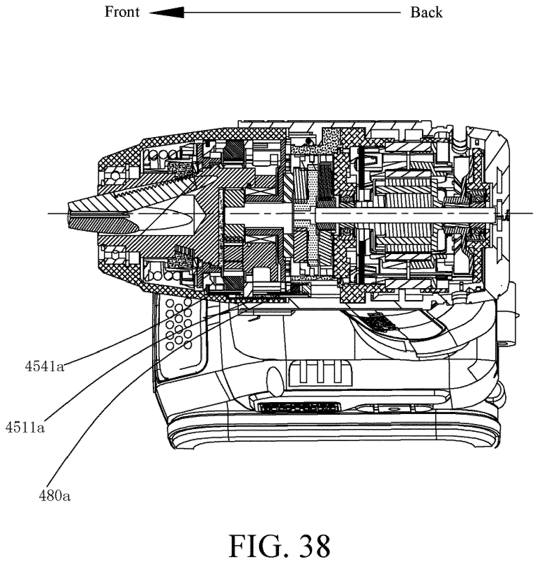

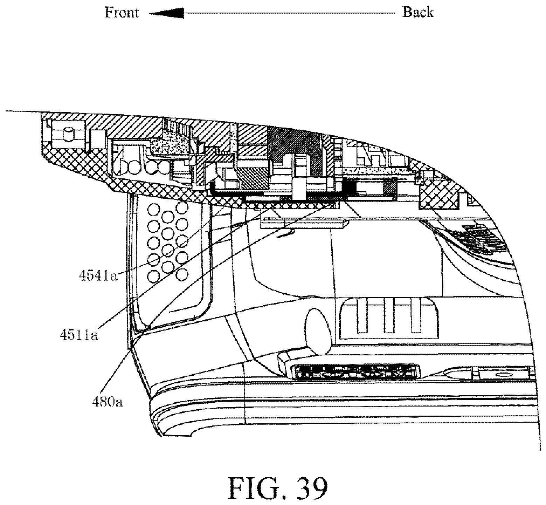

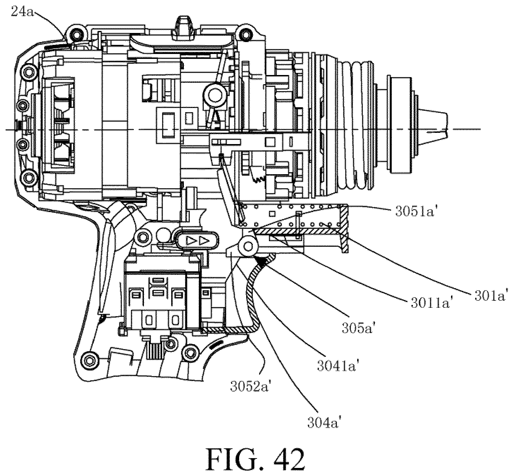

FIG. 31 to FIG. 42 are schematic diagrams of an electric screwdriver 10a according to another embodiment of the present invention, the screwdriver 10a includes a housing, a motor 12a, a battery 18 for supplying power, a transmission mechanism, and a chuck assembly. The chuck assembly includes a chuck housing (a front housing) 1104a and an output apparatus 15 located at least partially within the chuck housing 1104a. Specifically, the housing includes a rear housing 1103a extending in the horizontal direction and a handle housing 1102a that is fixedly connected to the rear housing 1103a and is used for forming a grip handle. The front housing 1104a is butted to the rear housing 1103a to form a main housing extending in the horizontal direction, and the main housing forms an accommodating cavity for accommodating at least a part of the output apparatus 15a.

The motor 12a is disposed in the housing and outputs a rotational power. The output apparatus 15a includes an output shaft 150a and the output shaft 150a is provided with an accommodating hole 1500a for accommodating a tool bit. The transmission mechanism is located between the motor 12a and the output apparatus 15a, to transmit a rotational power of the motor 12a to the output apparatus 15a. The mode selection mechanism is used for switching the screwdriver 10a at least between a drilling mode and a chuck adjustment mode.

Referring to FIG. 31 to FIG. 37, the output shaft 150a includes a main body 151d, chuck jaws 152a that are disposed around the accommodating hole and are used for clamping a tool bit, and a chuck groove 153a that is disposed on the main body 151d and is used for accommodating the chuck jaws 152a. The output apparatus 15a further includes an output planetary gears 1581a, an output gear ring 1582a located on the outer side of the output planetary gears 1581a, and an adjustment ring that is disposed on the outer side of the main body 151d and rotating relative to the main body 151d and the chuck jaws 152a to lock or open the chuck jaws 152a. This is basically the same as that in the foregoing embodiment. The adjustment ring includes a nut cover 154a, the inner circumferential wall of the nut cover 154a is provided with an internal thread (not shown in the figure), and a side surface, facing the internal thread, of the chuck jaw 152a is provided with an external thread 1521a. When the nut cover 154a rotates relative to the chuck jaws 152a, the interaction between the internal thread and the external thread 1521a causes the chuck jaws 152a to perform an opening action or a closing action. The transmission mechanism is provided with an output sun gear 1583a for driving the output planetary gears 1581a to rotate.

The mode selection mechanism includes a connecting member 420a capable of connecting the output gear ring 1582a to the adjustment ring and a locking component 130a capable of selectively preventing the output gear ring 1582a or the main body 151d from rotation. The locking component 130a is nonrotatably disposed relative to the housing. In the drilling mode, the locking component 130a is connected to the output gear ring 1582a to prevent the output gear ring 1582a from circumferentially rotating, and the output gear ring 1582a is disconnected from the adjustment ring under the action of the connecting member 420a, so that the main body 151d and the chuck jaws 152a are rotatable under the drive of the motor to drive the tool bit to operate. When the screwdriver 10a is switched from the drilling mode to the chuck adjustment mode, the locking component 130a is connected to the main body 151d and separated from the output gear ring 1582a to prevent the main body 151d from circumferentially rotating and to release the circumferential limitation of the output gear ring 1582a, and the output gear ring 1582a and the adjustment ring are connected under the action of the connecting member 420a. Therefore, the output gear ring 1582a is capable of driving the adjustment ring to rotate relative to the main body 151d and the chuck jaws 152a under the action of the motor 12a to open or close the chuck jaws 152a. Therefore, same as that in the first embodiment, the locking component 130a in this embodiment includes both a main body lock for locking the main body 151d and an internal gear ring lock for locking the output gear ring 1582a. In other words, the main body lock for locking the main body 151d and the internal gear ring lock for locking the output gear ring 1582a are inseparably connected or integrally formed. Different from that in the first embodiment, in this embodiment, the connecting member 420a is arranged, so that the output gear ring 1582a and the adjustment member are connected in the rotation direction in the auto chuck mode. However, in the drilling mode, instead of axially moving the output gear ring 1582a, the output gear ring 1582a is disconnected from the adjustment member in the rotation direction.

In this embodiment, the mode selection mechanism further includes a first push rod assembly 451a that is connected to the locking component 130a and is used for pushing the locking component 130a to move to selectively lock the main body 151d or the output gear ring 1582a by the locking component 130a, and a fourth push rod assembly 454a connecting the first push rod assembly 451a to the connecting member 420a. Therefore, the fourth push rod assembly 454a is capable of driving the connecting member 420a to move under the action of the first push rod assembly 451a. Preferably, in this embodiment, the locking component 130a moves in the axial direction to implement the switching of the locking component 130a between a first locking position and a second locking position, and the connecting member 420a is switched between a first connecting position and a second disconnection position by moving in the axial direction.

How the first push rod assembly 451a drives the fourth push rod assembly 454a and the connecting member 420a connected to the fourth push rod assembly 454a to move is further described below with reference to FIG. 31, FIG. 38, and FIG. 39. The fourth push rod assembly 454a includes a fourth connecting rod 4541a. The first push rod assembly 451a includes a first connecting rod 4511a. One end of the first connecting rod 4511a is connected to a mode connecting member 302a, and the other end is connected to the locking component 130a. When the screwdriver is switched from the drilling mode to the auto chuck mode, that is, the first connecting rod 4511a moves backward under the action of an external force. In this case, the first connecting rod 4511a drives the locking component 130a to move axially backward. To enable the first connecting rod 4511a to drive the fourth connecting rod 4541a to move axially backward, and the movement travel of the first connecting rod 4511a (that is, the locking component 130a) and the movement travel of the fourth connecting rod 4541a (that is, the connecting member 420a) may be different or asynchronous. One of the first connecting rod 4511a and the fourth connecting rod 4541a is provided with an axially extending connecting rod guide groove 4510a, and the other of the first connecting rod 4511a and the fourth connecting rod 4541a is provided with a connecting rod guide member 4542a located in the connecting rod guide groove 4510a. In this embodiment, the connecting rod guide groove 4510a is provided in the first connecting rod 4511a, and the connecting guide member 4542a is located in the fourth connecting rod 4541a. When the first connecting rod 4511a drives the locking component 130a to move axially backward by a specific distance, the locking component 130a is disconnected from the output gear ring 1582a, and the connecting rod guide member 4542a continues to move backward to abut against the connecting rod guide groove 4512a. Therefore, the first connecting rod 4511a drives the locking component 130a to move axially backward and further drives the fourth connecting rod 4514a to move axially backward. In this case, the locking component 130a is connected to the main body in the rotation direction, the main body is locked, the connecting member 420a is connected to the output gear ring after axially moving backward, and the screwdriver is switched to the auto chuck mode.

When the screwdriver is switched from the auto chuck mode to the drilling mode, the first connecting rod 4511a drives the locking component 130a to move forward in the axial direction under the action of an external force. To enable the first connecting rod 4511a to drive the fourth connecting rod 4541a to move axially forward, a push rod elastic member 480a is further disposed between the first push rod assembly 451a and the fourth connecting rod 4541a. The first push rod assembly 451a first drives the locking component 130a to move axially forward, and the forward movement of the first push rod assembly 451a enables the push rod elastic member 480a to be compressed. After the push rod elastic member 480a is compressed to a specific extent, the fourth connecting rod 4541a is pushed through the push rod elastic member 480a to move forward.

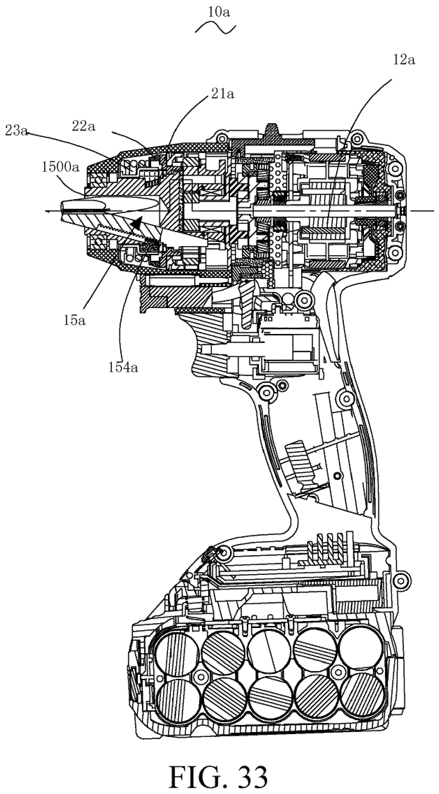

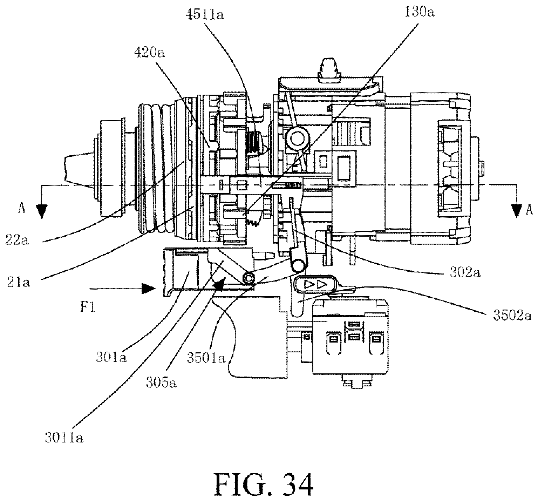

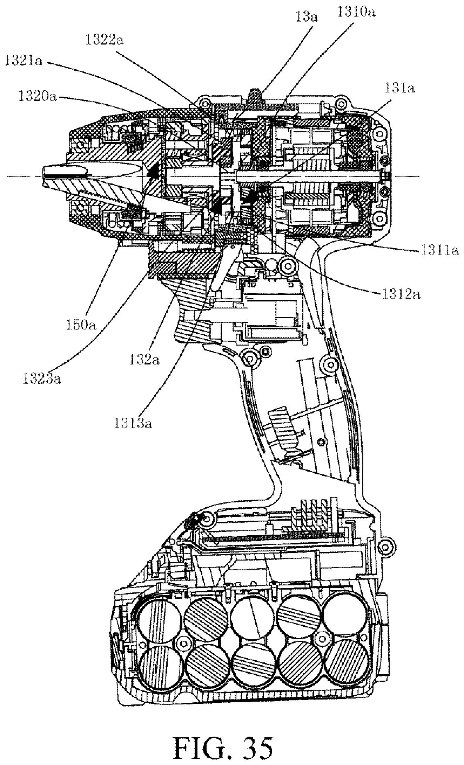

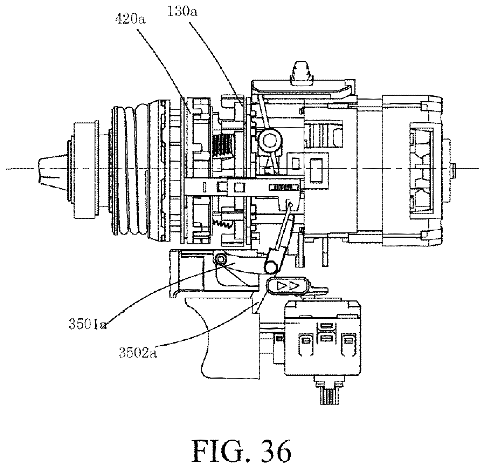

Referring to FIG. 35 and FIG. 36, when the screwdriver is in the auto chuck mode, the locking component 130a is located in the first locking position, the connecting member 420a is in the first connecting position, the locking component 130a circumferentially nonrotatably locks the main body 151d to the housing, and the connecting member 420a connects the output gear ring 1582a to the adjustment ring. Referring to FIG. 33 and FIG. 34, in the drilling mode, the locking component 130a is located in the second locking position, the locking component 130a axially moves to release the circumferential locking of the main body 151d and circumferentially locks the output gear ring 1582a, and the connecting member 420a breaks the connection between the output gear ring 1582a and the adjustment ring. The output planetary gears 1581a is capable of driving the main body 151d and the chuck jaws 152a located in the main body 151d to rotate together.

The screwdriver 10a further includes a clutch mechanism 20a that is located between the adjustment ring and the output gear ring 1582a and is used for interrupting torque transmission between the output gear ring 1582a and the adjustment ring in the auto chuck mode after the chuck jaws 152a are opened or closed. The clutch mechanism 20a includes a first clutch member 21a rotatably connected to the output gear ring 1582a, a second clutch member 22a that is rotatably connected to the adjustment ring and is axially movable relative to the adjustment ring, and a clutch elastic member 23a. In this embodiment, the clutch elastic member 23a is located between the second clutch member 22a and the front housing 1104a. When the chuck jaws 152 a are clamped or fully opened, the second clutch member 22a compresses the clutch elastic member 23a, the second clutch member 22a moves axially forward, the first clutch member 21a is disengaged from the second clutch member 22a, and the output gear ring 1582a no longer transmits torque to the adjustment ring (the nut cover 154a). Preferably, the first clutch member 21a is a snap ring sleeved on the periphery of the main body 151a', the snap ring is provided with an axially extending clutch tooth groove 211a, and the connecting member 420a is provided with connecting teeth 421a matching the tooth groove 211a. In this embodiment, the connecting member 420a is usually engaged with the first clutch member 21a. That is, the connecting teeth 421a remain located in the clutch tooth groove 211a, and the connecting teeth 421a move axially backward in the clutch tooth groove 211a, that is, axially move toward the output gear ring 1582a, thereby implementing the connection between the first clutch member 21a and the output gear ring 1582a. Certainly, it may be understood that, in another embodiment, the clutch structure 20a may be disposed in another manner. For example, the clutch elastic member 23a is located between the first clutch member 21a and the housing 11a. After the chuck jaws 152a are clamped or fully opened, the first clutch member 21a compresses the clutch elastic member 23a, the first clutch member moves axially, and the first clutch member 21a is disengaged from the second clutch member 22a, and the output gear ring 1582a no longer transmits torque to the nut cover 154a.

In this embodiment, the mode selection mechanism further includes a mode selection member 301a. The mode selection member 301a is connected to the first push rod assembly 451a to transmit the movement of the mode selection member 301a to the first push rod assembly 451a. In this embodiment, to facilitate the mode switching when an operator holds the handle housing 1102a with a single hand, the mode selection member 301a is disposed adjacent to the handle housing 1102a to enable the operator to simultaneously hold the handle and control the linear movement of the mode selection member 301a with a single hand. Preferably, in this embodiment, when the screwdriver is switched to the auto chuck mode, the mode selection member 301a moves in a first direction under the pressing action of a finger. Preferably, the output shaft 150a has a first end provided with the accommodating hole 1500a and a second end opposite to the first end in the axial direction, and the first direction is a direction from the first end to the second end. That is, the mode selection member 301a has an initial position and a switching position after moving in place from the initial position in the first direction. Therefore, when the mode selection member 301a moves to the switching position in the first direction, the screwdriver is in the auto chuck mode. In addition, in this embodiment, the mode selection mechanism further includes a mode reset component 303a. The mode reset component 303a is located between the mode selection member 301a and the housing. When the mode selection member 301a moves to the switching position in the first direction, the mode reset component 303a is in an elastic energy storage state through the mode selection member 301a under the action of an external force. That is, when the mode reset component 303a is a tension spring, the mode reset component 303a stretches under the action of an external force. When the mode reset component 303a is a compression spring, the mode reset component 303a compresses under the action of an external force. When the external force is released, the mode selection member 301a moves to the initial position under the action of the mode reset component 303a. It should be noted that when the screwdriver 10a is switched from the drilling mode to the auto chuck mode, in this embodiment, both the locking component 130a and the connecting member 420a move in the first direction, which is consistent with the movement direction of the mode selection member 301a. In the arrangement manner, the mode selection member 301a is capable of driving the locking component 130a and the connecting member 420a through a simple linkage mechanism (for example, the first push rod assembly 451a and the fourth push rod assembly 454a) to move. Compared with a case that the movement direction of the locking component 130a or the connecting member 420a is inconsistent with the movement direction of the mode selection member 301a, the linkage mechanism does not need to be switched in the movement direction, and the linkage mechanism is simple in structure. It may be learned from the description that, in the drilling mode, the connecting member 420a is located on a side, away from the motor, of the output gear ring 1582a and is connected to the adjustment member by the clutch mechanism without relative rotation, and the locking component 130a is coupled to the output gear ring 1582a. When the power tool is switched from the drilling mode to the chuck adjustment mode, the connecting member 420a and the locking component 130a move in the axial direction of the motor shaft toward the motor, so that the connecting member 420a is in transmission connection between the output gear ring 1582a and the adjustment member in the rotation direction, and the locking component 130a is disengaged from the output gear ring 1582a and fixes the main body relative to the housing.

In this embodiment, the screwdriver further includes a switch operating member 304a for controlling the power supply or the power interruption of the motor and a first control assembly for controlling the movement of the motor according to the movement of the switch operating member 304a. To facilitate the control of the speed of the motor when the switch operating member is operated, the first control assembly enables the rotation speed of the motor to be different as the travel of the movement of the switch operating member is different. When the travel is larger, the rotation speed of the motor is higher. It is basically the same as the movement manner of the mode selection member 301a in this embodiment. To facilitate the control of the switch operating member when the operator holds the handle with a single hand, the switch operating member 304a is disposed adjacent to the handle housing, so that the operator can simultaneously hold the handle and control the switch operating member with the single hand, and the movement of the switch operating member 304a is preferably a linear movement. The switch operating member 304a has a switch initial position for disconnecting the motor from the power supply and an operating position for connecting the motor to the power supply, and a larger travel of the movement of the switch operating member in the first direction indicates a larger distance between the operating position and the output position and a higher rotation speed of the motor.

It may be learned from the description of the first embodiment that, when the screwdriver is in the auto chuck mode, if the speed of the motor is relatively high, problems such as strident "tripping" sound and a poor operating environment tend to occur. To avoid the occurrence of the problem, it is necessary to limit the travel of the movement of the switch operating member 304a to avoid that the rotation speed of the motor is relatively high due to the relatively large travel of the movement of the switch operating member 304a. Referring to FIG. 33 to FIG. 37, in this embodiment, the screwdriver further includes an interlock mechanism 305a. The interlock mechanism 305a is pivotally disposed at the housing and can pivotally move in a predetermined pivoting direction under the drive of the mode selection member 301a. The interlock mechanism 305a includes a first limiting arm 3051a and a second limiting arm 3052a. Referring to FIG. 35 and FIG. 36, when the mode selection member 301a is switched to the switching position, the mode selection member 301a forces the first limiting arm 3051a to drive the interlock mechanism 305a to pivot to a first limiting position. A free end of the second limiting arm 3052a moves between the switch initial position and a switch end operating position, that is, moves to the operation position to limit the travel of movement of the switch operating member, thereby controlling the rotation speed of the motor. To prevent an operator from misoperating the mode selection member 301a in the drilling mode, after the switch operating member 304a moves to any operation position, if the mode selection member 301a is operated, the mode selection member 301a drives the free end of the first limiting arm 3051a to pivot between the initial position and the switching position, a travel switch abuts against the second limiting arm 3052a in the preset pivoting direction, and the mode selection member 301a cannot move to the switching position. In this embodiment, a mode connecting member 302a is further disposed between the interlock mechanism 305a and the first connecting rod 4511a, and preferably, the mode connecting member 302a is an elastic steel wire.

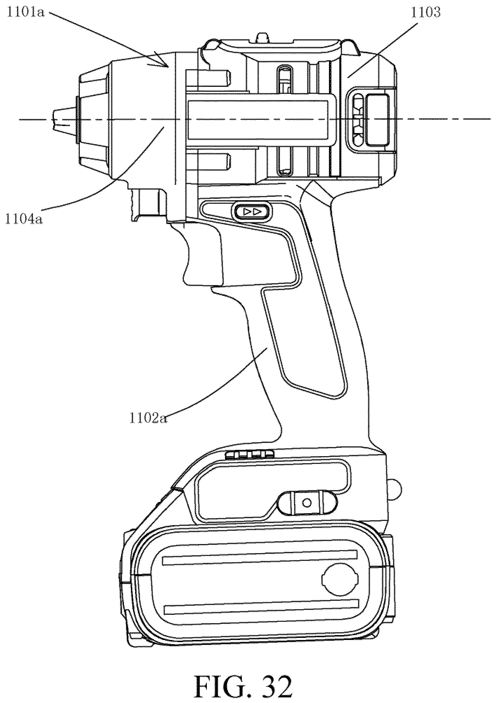

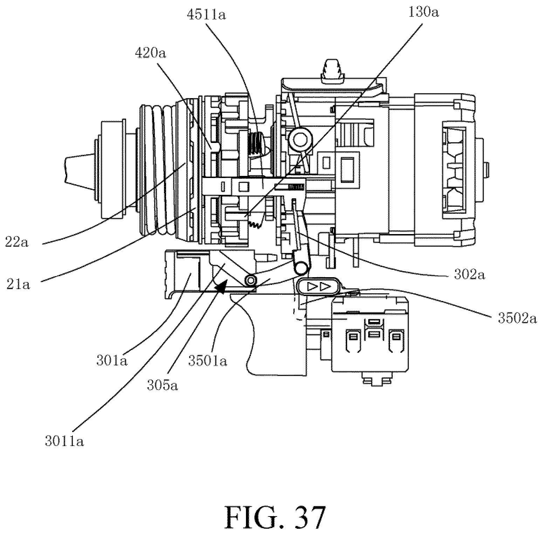

Referring to FIG. 32 to FIG. 37, in this embodiment, the mode selection member 301a is provided with a mode switching groove 3011a for guiding the movement of the free end of the first limiting arm 3051a. Referring to FIG. 34 and FIG. 35, when the mode selection member 301a moves in the first direction F1 shown in FIG. 33 to a position shown in FIG. 35, the free end of the first limiting arm 3051a moves according to a preset path under the action of the mode switching groove 3011a, the interlock mechanism 305a pivots in a preset direction, and the second limiting arm 3052a pivots to a predetermined position between the switch end position and the switch initial position, so that the switch operating member 304a abuts against the second limiting arm 3052a at the predetermined position, and the switch operating member 304a cannot move from the switch initial position to the switch end position, that is, the switch operating member 304a cannot move beyond the predetermined position to an end position. Referring to FIG. 34 and FIG. 37, when the switch operating member 304a is switched from the initial position shown in FIG. 34 to the switch end position shown in FIG. 37 in the drilling mode, the free end of the second limiting arm 3502a can abut against the switch operating member 304a in a preset rotation direction, and when the mode selection member is operated, the interlock mechanism 305a cannot pivot in the preset direction. Therefore, in this case, the mode operating member cannot operate or can operate but cannot switch the power tool to the chuck adjustment mode. It may be understood that, in this embodiment, when the switch operating member is switched from the initial position shown in FIG. 34 to the end position shown in FIG. 37, that is, when the switch operating member is switched to or beyond the predetermined position, when the mode operating member is switched, and when the mode switching member has not moved to the switching position, that is, when the power tool has not completed the mode switching, the second limiting arm 3052a abuts against the switch operating member 304a. Therefore, the mode selection member 301a cannot complete the mode switching.

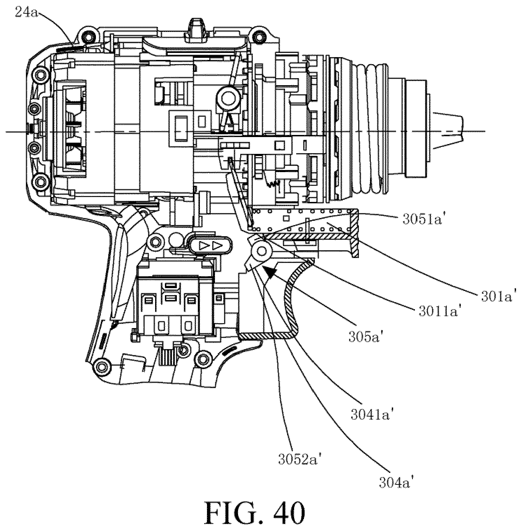

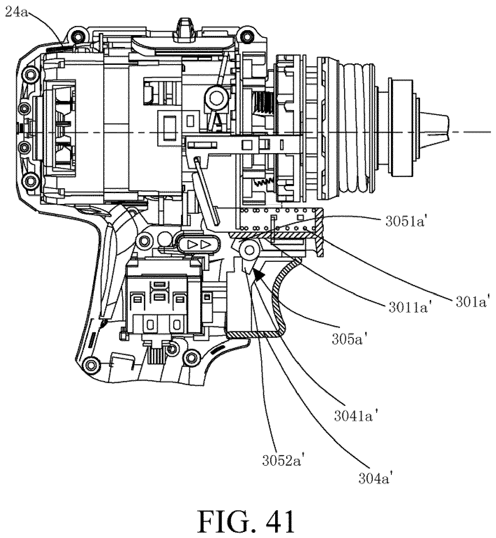

In another embodiment of the present invention, the interlock mechanism 305a may be disposed in another form. Referring to FIG. 40 to FIG. 42, the interlock mechanism 305a' is pivotally disposed at the housing and can pivotally move in the preset pivoting direction under the drive of the mode selection member 301a'. The interlock mechanism 305a' includes a first limiting arm 3051a' and a second limiting arm 3052a'. When the mode selection member 301a' is switched to the switching position, the mode selection member 301a' forces the first limiting arm 3051' to drive the interlock mechanism 305a' to pivot to the first limiting position, and the free end of the second limiting arm 3052a' moves to a predetermined position between the switch initial position and the switch end position to limit the switch operating member from moving beyond the predetermined position. When the switch operating member 304a' moves to the end position, the second limiting arm 3052a' abuts against the travel switch in the preset pivoting direction, and the mode selection member 301a' cannot move to the switching position. It may be understood that, same as that in the first embodiment, when the switch operating member 304a' moves to the predetermined position and any position beyond the predetermined position, and when the mode selection member 301a' is operated, the second limiting arm 3052a' abuts against the switch operating member 304a' when the operation mode selection member 301a' does not reach the mode switching position. The mode selection member 301a' is provided with a first abutting portion 3011a' abutting against the first limiting arm 3051a'. Referring to FIG. 40 and FIG. 41, when the mode selection member 301a' moves in the first direction, the first abutting portion 3011a' abuts against the first limiting arm 3051a', and the first limiting arm 3051a' drives the limiting interlock mechanism 305a' to pivot in a preset direction. The switch operating member 304a' is provided with a second abutting portion 3041a' capable of abutting against the second limiting arm 3052a'. When the switch operating member 304a' moves in the first direction, the second abutting portion 3041a' abuts against the second limiting arm 3052a', and the second limiting arm 3052a' drives the interlock mechanism 305a' to reversely pivot in the preset direction. Therefore, the free end of the first limiting arm 3051a' moves between the initial position and the switching position. When the mode selection member 301a' moves in the first direction, the first abutting portion 3011a' abuts against the first limiting arm 3051a', and the mode selection member 301a' cannot move to the switching position, that is, the mode selection member 301a' cannot switch the screwdriver to the auto chuck mode. In addition, in this embodiment, the mode connecting member 302a' is directly connected to the mode selection member 301a', that is, the mode connecting member 302a' is not connected to the mode selection member 301a' by the interlock mechanism 305a'.

Same as the arrangement manner of the transmission mechanism in the first embodiment, in this embodiment, the transmission mechanism is a planetary gear speed reduction mechanism 13a. The planetary gear speed reduction mechanism 13a is preferably a two-stage planetary gear speed reduction mechanism, and includes a first-stage planetary gear train 131a close to the motor and a second-stage planetary gear train 132a close to the output apparatus 15a. The first-stage planetary gear train 131a includes a first sun gear 1310a fixed on the motor shaft 121a, a first set of planetary gears 1311a that is engaged with the first sun gear 1310a and is disposed on the periphery of the first sun gear 1310a, a first internal gear ring 1312a engaged with the first planetary gears 1311a, and a first planetary carrier 1313a for supporting the first planetary gears 1311a. The second-stage planetary gear train 132a includes a second sun gear 1320a fixedly disposed on the first planetary carrier 1313a, a second set of planetary gears 1321a engaged with the second sun gear 1320a, a second internal gear ring 1322a engaged with the second set of planetary gears 1321a, and a second planetary carrier 1323a for supporting the second set of planetary gears 1321a. The second internal gear ring 1322a is movable relative to the housing along the motor output shaft 121a between a first reduction position close to the motor and a second reduction position far away from the motor. When the second internal gear ring 1322a is in the first reduction position, the second internal gear ring 1322a is rotatably disposed in the housing, and the second internal gear ring 1322a is simultaneously engaged with the first planetary carrier 1313a and the second set of planetary gears 1321a, so that the first planetary carrier 1313a, the second set of planetary gears 1321a, and the second internal gear ring 1322a rotate together. The second-stage planetary gear train 132a produces an output without reduction. That is, the second planetary carrier 1323a rotates at the same speed as the first planetary carrier 1313a, and the second planetary carrier 1323a produces a high-speed output. When the second internal gear ring 1322a is in the second reduction position, the second internal gear ring 1322a is circumferentially nonrotatably fixed to the rear housing 110a, and the second internal gear ring 1322a is disengaged from the first planetary carrier 1313a during axial movement but the second internal gear ring 1322a is still engaged with the second set of planetary gears 1321a, so that the second planetary carrier 1323a produces an output at a preset reduction ratio relative to the first planetary carrier 1313a, and the second planetary carrier 1323a produces a low-speed output.

In this embodiment, the mode selection member 301a is provided with a switch trigger member (not shown in the figure). When the mode switching member moves to the switching position, the switch trigger member is triggered, a power supply circuit of the motor is turned on, and the motor drives the adjustment ring to rotate relative to the main body 151d to implement the opening or closing of the chuck jaws. It should be noted that, in the first embodiment, to ensure that the rotation speed of the output shaft 15a is low in the auto chuck mode, the second planetary carrier produces a low-speed output in the auto chuck mode by arranging a "T" groove structure. In this embodiment, to ensure that the rotation speed of the output shaft 15a is low in the auto chuck mode, the screwdriver 10a further includes a position sensor 24a and a second control assembly. The position sensor 24a is used for detecting the position of the second internal gear ring 1322a and transmitting a position signal of the second internal gear ring 1322a to the second control assembly. The second control assembly controls the rotation speed of the motor according to the position of the second internal gear ring 1322a, so that the output shaft 15a can always produce an output in an auto chuck low-speed mode in the auto chuck mode, that is, produce an output at a speed lower than a preset speed. It should be noted that a specific value is not used in the auto chuck low-speed mode in this embodiment, and the speed of the output shaft 15a only needs to be less than a preset rotation speed value.

In this embodiment, the mode selection member 301a drives the locking component 130a and the connecting member 420a through the first push rod assembly 451a and the fourth push rod assembly 454a respectively to move. During mode switching, the movement travels of the locking component 130a and the connecting member 420a are inconsistent. It may be understood that, in another embodiment, the movement travels of the locking component 130a and the connecting member 420a can also be set to be consistent. That is, the locking component 130a and the connecting member 420a are capable of being driven by the same connecting rod to move synchronously.

### Fifth Implementation

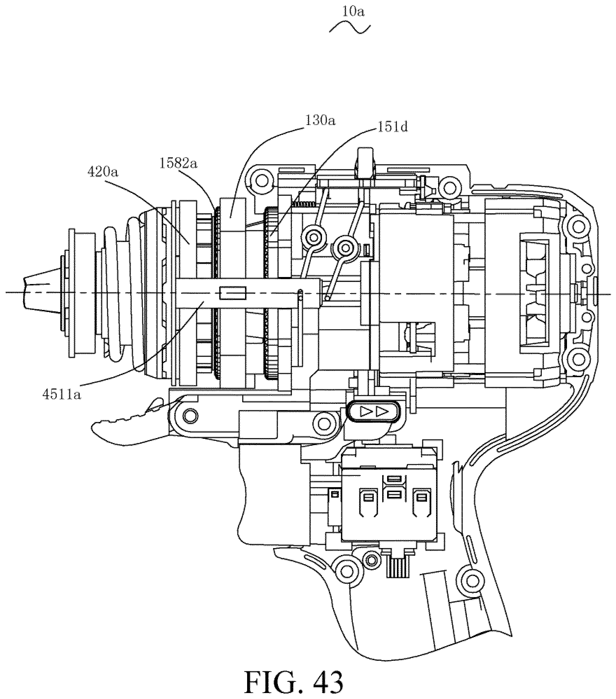

FIG. 43 to FIG. 45 are schematic diagrams of a screwdriver 10a according to a fifth embodiment of the present invention, and parts having the same structure as those in the fourth embodiment are designated by the same reference numerals. In this embodiment, the first connecting rod 4511a simultaneously drives the locking component 130a and the connecting member 420a to move. Same as that in the fourth embodiment, in the drilling mode, the locking component 130a is disengaged from engagement teeth (not shown in the figure) on the main body 151d and is engaged with an engagement teeth portion (not shown in the figure) of the output gear ring 1582a, the output gear ring 1582a is fixed relative to the housing, and the connecting member 420a is disengaged from the output gear ring 1582a.

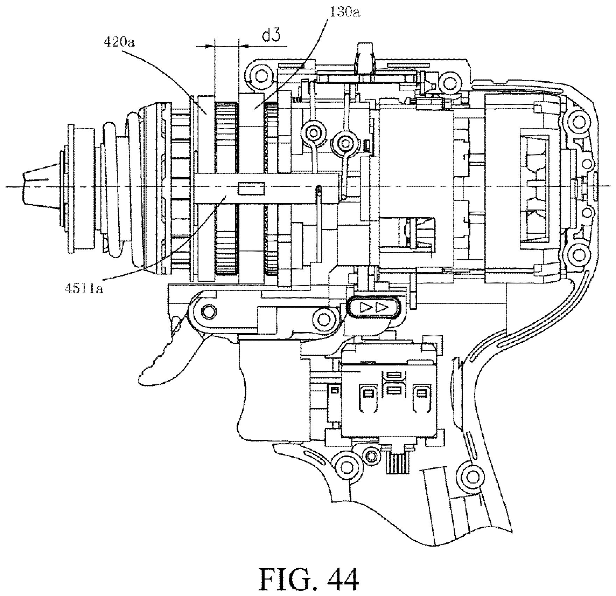

Referring to FIG. 44, when the screwdriver 10a is switched from the drilling mode to the auto chuck mode, the locking component 130a and the connecting member 420a move axially backward under the action of the first connecting rod 4511a. After being disconnected from the output gear ring 1582a, the locking component 130a continues to move to be engaged with the engagement teeth on the main body 151d, and correspondingly, the connecting member 420a is engaged with the engagement teeth portion of the output gear ring 1582a. It should be noted that to avoid motor stalling when the locking component 130a has not been disengaged from the output gear ring 1582a and the connecting member 420a is engaged with the output gear ring 1582a, in this embodiment, preferably, an axial spacing between the connecting member 420a and the output gear ring 1582a is greater than or equal to an axial length of the output gear ring 1582a. Preferably, in this embodiment, that the axial spacing between the connecting member 420a and the output gear ring 1582a is greater than or equal to the axial length of the output gear ring 1582a is understood as that the distance between a side surface, close to the output gear ring, of the connecting member 420a and a side surface, close to the output gear ring 1582a, of the locking component 130a is d3. The distance between the two side end surfaces in the axial direction of the output gear ring 1582a is d4 (not shown in the figure), and d3 is greater than or equal to d4. Because d3 is greater than or equal to d4 to avoid motor stalling when the locking component 130a has not been disengaged from the output gear ring 1582a and the connecting member 420a is engaged with the output gear ring 1582a. It may be understood that, in another embodiment, that the axial spacing between the connecting member 420a and the output gear ring 1582a is greater than or equal to the axial length of the output gear ring 1582a may be understood as that the axial spacing between the connecting member 420a and the locking component 130a does not enable the engagement teeth on the output gear ring 1582a to be simultaneously engaged with the engagement teeth on the connecting member 420a and the engagement teeth of the locking component 130a.

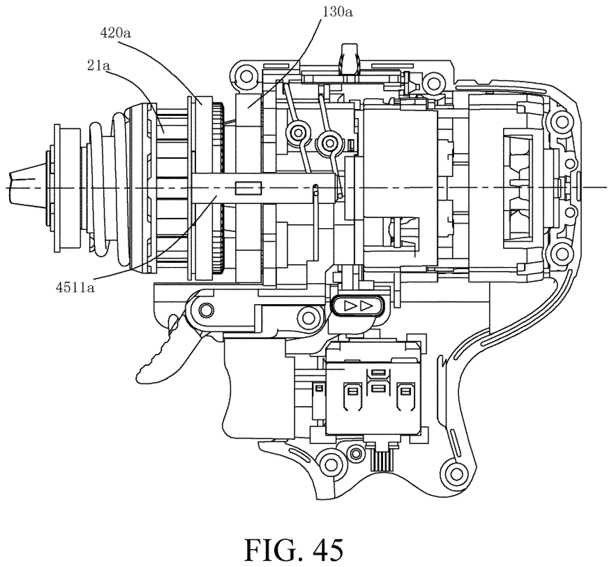

Referring to FIG. 45, when the screwdriver 10a is switched to the auto chuck mode, the locking component 130a is disengaged from the engagement teeth of the output gear ring 1582a and engaged with the engagement teeth on the main body 151d, the main body 151d is locked in the rotation direction, and the connecting member 420a is connected to both the output gear ring 1582a and the first clutch member 21a, so that the adjustment ring is rotatable relative to the main body to implement the opening or closing of the chuck jaws.

It may be learned from the descriptions of the fourth and fifth embodiments and from FIG. 34 and FIG. 35 that, the connecting member moves between the output gear ring 1582a and the adjustment member in the axial direction of the drive shaft. When the chuck jaws are in the rear-end position, the connecting member axially overlaps the chuck jaws at the drive shaft 1325 in the axial direction of the drive shaft. Preferably, when the chuck jaws 152a are in the fully open state (the rear-end position), the locking component 130a overlaps the chuck jaws 152a in the axial direction of the drive shaft. Further, in the fourth embodiment and the fifth embodiment, the mode selection member is at least partially overlapped with the chuck jaws in the axial direction of the drive shaft.

In view of the foregoing description of the various embodiments, in the present invention, the clutch mechanism is at least partially overlapped with the chuck jaws in the axial direction of the drive shaft. It should be noted that when the chuck jaws are closed or opened, the chuck jaws are movable between a front-end position far away from the motor in the axial direction of the drive shaft (FIG. 5) and a rear-end position close to the motor (FIG. 4). The overlap or partial overlap with the chuck jaws in the axial direction of the drive shaft according to the present invention is an overlap at any one of the front-end position or the rear-end position.

In addition, It may be learned from the descriptions of the first to fifth embodiments of the present invention, although in the present invention, in the auto chuck mode, the main body is fixed relative to the housing, so that the chuck jaws located in the main body is also fixed relative to the housing in the rotation direction, and the adjustment member rotates relative to the chuck jaws under the drive of the drive shaft. However, the support for the main body by the first support member and the second support member in the present invention is not limited to the particular implementation in the auto chuck mode (that is, the chuck jaws are stationary and the adjustment member rotates relative to the chuck jaws), provided that one of the chuck jaws and the adjustment member is rotatable relative to the other of the chuck jaws and the adjustment member.

The present invention is not limited to the implementations in the foregoing embodiments, and other modifications may be made by a person skilled in the art in light of the technical spirit of the present invention, but it is intended to cover such modifications as falling within the scope of the present invention provided that they perform the same or similar functions as the present invention.

## Claims

1. A hand-held power tool, comprising:
a housing;
a motor (12) disposed in the housing and being configured to be capable of outputting a rotational power;
a chuck assembly comprising a main body (151), a plurality of chuck jaws (152) movably disposed relative to the main body (151), and an adjustment member (154) threadedly coupled to the plurality of chuck jaws (152); and
a transmission mechanism (13) comprising a drive shaft (1325) configured for transmitting the rotational power of the motor (12), wherein
the power tool is at least provided with a drilling mode and an auto chuck mode; when the power tool is in the drilling mode, the main body(151) is driven by the drive shaft(1325) and rotates together with the chuck jaws(152) and the adjustment member(154); when the power tool is in the auto chuck mode, one of the adjustment member(154) and the main body(151) is rotatable relative to the other of the adjustment member(154) and the main body(151) to switch the chuck jaws(152) between a fully closed state and a fully open state, and comparing with the chuck jaws(152) in the fully closed state, the chuck jaws(152) in the fully open state are closer to the motor(12) in the axial direction of the drive shaft(1325); **characterized in that**
the power tool further comprises a first support member(1327) and a second support member(16) for rotatably supporting the main body(151) in the housing, the first support member(1327) is disposed close to the motor(12) in the axial direction of the drive shaft(1325) relative to the second support member(16), when the chuck jaws(152) are in the fully open state, the first support member(1327) is at least partially overlapped with the chuck jaws(152) in the axial direction of the drive shaft(1325), and when the chuck jaws(152) are in the fully closed state, the second support member(16) and the chuck jaws(152) overlap in the axial direction of the drive shaft(1325).

2. The hand-held power tool according to claim 1, **characterized in that** the power tool further comprises a clutch mechanism(20), when the power tool is in the auto chuck mode, the clutch mechanism(20) is configured to be capable of cutting off the rotational power from a motor shaft(121) to the adjustment member(154) or the main body(151) when a torque between the plurality of chuck jaws(152) and the adjustment member(154) reaches a predetermined value, so that there is no relative rotation between the adjustment member(154) and the chuck jaws(152), and the clutch mechanism(20) is s at least partially overlapped with the chuck jaw(152) in the axial direction of the drive shaft(1325).

3. The hand-held power tool according to claim 2, **characterized in that** the clutch mechanism(20) comprises a first clutch member(21), a second clutch member(22), and a clutch elastic member(23), one of the first clutch member(21) and the second clutch member(22) is non-rotationally connected with the adjustment member(154), and the other of the first clutch member(21) and the second clutch member(22) is connected to the housing or the motor(12) ; when the power tool is in the auto chuck mode, the first clutch member(21) and the second clutch member(22) are engaged with each other; and when the torque between the first clutch member(21) and the second clutch member(22) reaches a predetermined value, one of the first clutch member(21) and the second clutch member(22) is movable relative to the other of the first clutch member(21) and second clutch member(22) against a elastic force of the clutch elastic member(23) to disengage to each other, so that there is no relative rotation between the adjustment member(154) and the plurality of chuck jaws(152).

4. The hand-held power tool according to claim 1, **characterized in that** the adjustment member(154) is sleeved on the outer side of the plurality of chuck jaws(152), an inner circumferential surface of the adjustment member(154) is provided with an internal thread, and the chuck jaw(152) is provided with an external thread(1521) for matching with the internal thread.

5. The hand-held power tool according to claim 1, **characterized in that** the main body (151) is provided with an accommodating cavity (1515), the accommodating cavity (1515) has an opening facing to the motor(12), and the first support member(1327) is located in the accommodating cavity(1515).

6. The hand-held power tool according to claim 5, **characterized in that** the housing comprises a main housing (1101) accommodating the motor (12), an end cover (1123) extending radially from the main housing (1101), and a support portion (1124) extending from the end cover (1123) to the accommodating cavity (1515), the first support member (1327) is supported on the outer side of the support portion(1124).

7. The hand-held power tool according to claim 6, **characterized in that** the main body (151) is provided with a first end close to the motor (12) and a second end far away from the motor (12), and the end cover (1123) is disposed adjacent to the first end and is located between the main body (151) and the motor (12).

8. The hand-held power tool according to claim 7, **characterized in that** the power tool further comprises at least one output planetary gear train located on a side of the end cover(1123) away from the motor(12), the output planetary gear train comprises at least one sun gear(1583) coupled to the drive shaft(1325) and a set of planetary gears(1581) disposed on the main body(151) and engaged with the sun gear(1583), when the power tool is in the drilling mode, the drive shaft(1325) is configured to be capable of driving the main body(151) to rotate by the planetary gears(1581), and when the chuck jaws(152) are in the fully open state, the chuck jaws(152) are at least partially overlapped with the planetary gears(1581) in the axial direction of the drive shaft(1325).

9. The hand-held power tool according to claim 8, **characterized in that** the support portion (1124) is configured as a hollow cylindrical body, the sun gear (1583) connected to an end of the drive shaft (1325) that passes through the cylindrical body and penetrates into the main body (151).

10. The hand-held power tool according to claim 1, **characterized in that** the power tool comprises at least one output planetary gear train, the output planetary gear train comprises a sun gear(1583) coupled to the drive shaft(1325), a set of planetary gears(1581) disposed on the main body(151) and driven by the sun gear(1583), and an output gear ring(1582) engaged with the planetary gears(1581), when the power tool is in the drilling mode, the output gear ring(1582) is fixed relative to the housing, the drive shaft(1325) is configured to be capable of driving the main body(151) to rotate through the planetary gears(1581), and when the chuck jaws(152) are in the fully open state, the planetary gears(1581) are at least partially overlapped with the chuck jaws(152) in the axial direction of the drive shaft(1325).

11. The hand-held power tool according to claim 10, **characterized in that** the power tool further comprises a mode selection mechanism, the mode selection mechanism is configured to be operable to switch the power tool at least between the drilling mode and the auto chuck mode, when the power tool is in the auto chuck mode, the main body(151) is fixed relative to the housing, and the output gear ring(1582) is configured to be driven by the motor(12) to rotate relative to the housing and capable of transmitting a rotational power to the adjustment member(154).

12. The hand-held power tool according to claim 11, **characterized in that** the mode selection mechanism comprises a mode selection member(301') and a connecting member(182') driven by the mode selection member(301'), when the power tool is in the auto chuck mode, the connecting member(182') is configured to be capable of transmitting a driving force of the output gear ring(1582') to the adjustment member(154'), and when the power tool is in the drilling mode, the connecting member(182') is configured to be capable of cutting off the driving force from the output gear ring(1582') to the adjustment member(154').

13. The hand-held power tool according to claim 12, **characterized in that** when the chuck jaws (152') are in the fully open state, the connecting member (182') and the chuck jaws (152') overlap in the axial direction of the drive shaft (1325).

14. The hand-held power tool according to claim 11, **characterized in that** the mode selection mechanism further comprises a locking component (130) that is non-rotatably disposed relative to the housing and is capable of being driven by the mode selection member, and the locking component (130) selectively fixes the main body (151) or the output gear ring (1582) relative to the housing.

15. The hand-held power tool according to claim 14, **characterized in that** when the chuck jaws (152) are in the fully open state, the locking component (130) and the chuck jaws(152) overlap in the axial direction of the drive shaft(1325).

16. The hand-held power tool according to claim 1, **characterized in that** the power tool further comprises a mode selection mechanism, the mode selection mechanism comprises a mode selection member (301') configured to be operable to switch the power tool at least between the drilling mode and the auto chuck mode, and the mode selection member (301') is at least partially overlapped with the chuck jaws (152') in the axial direction of the drive shaft(1325).

17. The hand-held power tool according to claim 1, **characterized in that** the chuck assembly comprises a chuck housing (1104) fixedly arrange relative to the housing, and the chuck housing (1104) covers at least part of the main body (151), the second support member(16) is located at one end of the main body(151) away from the motor(12) and between the main body(151) and the chuck housing(1104).

18. The hand-held power tool according to any one of claims 1 to 17, **characterized in that** the distance between a first end surface of the motor (12) close to the chuck assembly (1104) and a second end surface of the body (151) away from the motor(12) is between 80 mm and 95 mm.

19. A hand-held power tool, comprising:
a housing;
a motor (12) disposed in the housing and being configured to be capable of outputting a rotational power;
a chuck assembly, comprising a main body (151), a plurality of chuck jaws(152) movably disposed relative to the main body(151), and an adjustment member(154) threadedly coupled to the plurality of chuck jaws(152); and
a transmission mechanism(13) comprising a drive shaft(1325) configured for transmitting the rotational power of the motor(12), **characterized in that** the power tool is at least provided with a drilling mode and an auto chuck mode; when the power tool is in the drilling mode, the main body(151) is driven by the motor(12) and rotates together with the chuck jaws(152) and the adjustment member(154); when the power tool is in the auto chuck mode, one of the adjustment member(154) and the main body(151) is rotatable relative to the other of the adjustment member(154) and the main body(151) to close or open the chuck jaws(152); and the power tool further comprises a first support member(1327) rotatably supporting the main body(151) in the housing, the main body(151) is provided with an accommodating cavity(1515) that facing to the motor(12), the first support member(1327) is located in the accommodating cavity(1515).

20. The hand-held power tool according to claim 19, **characterized in that** the power tool comprises at least one output planetary gear train, the output planetary gear train comprises a sun gear(1583) driven by a motor shaft(121) to rotate, a set of planetary gears(1581) driven by the sun gear(1583), and an output gear ring(1582) engaged with the planetary gears(1581), when the power tool is in the drilling mode, the main body(151) is driven to rotatable by the planetary gears(1581), and when the chuck jaws(152) are in a fully open state, the planetary gears(1581) are at least partially overlapped with the chuck jaws(152) in the axial direction of the drive shaft(1325).

21. The hand-held power tool according to claim 19 or 20, **characterized in that** the distance between a first end surface of the motor (12) close to the chuck assembly (1104) and a second end surface of the body (151) away from the motor (12) is between 80 mm and 95 mm.

22. The hand-held power tool according to claim 19 or 20, **characterized in that** a radial length of the chuck assembly (1104) is less than or equal to 60 mm.
